# EUROPEAN PATENT APPLICATION

(11) **EP 4 344 317 A1**
(43) Date of publication of application: **27.03.2024**
(21) Application number: 22878875.8
(22) Date of filing: 05.10.2022
(51) Int. Cl.: H04W 60/04, H04W 8/08, H04W 48/10, H04W 48/16, H04W 48/18, H04W 88/06, H04W 84/10

(54) **DEVICE AND METHOD FOR SUPPORTING ACCESS FOR LOCAL SERVICE IN WIRELESS COMMUNICATION SYSTEM**

(30) Priority: 07.10.2021 KR 20210133437
(71) Applicant: Samsung Electronics Co., Ltd., Suwon-si, Gyeonggi-do 16677 (KR)
(72) Inventor: MOON, Sangjun, Suwon-si, Gyeonggi-do 16677 (KR)
(74) Representative: Gulde & Partner
(86) International application number: PCT/KR2022/014970
(87) International publication number: WO 2023/059054

(57) **Abstract**

The present disclosure relates to a 5G or 6G communication system for supporting a higher data transmission rate. A method for operating a terminal according to the present disclosure comprises the steps of: transmitting, to a first base station of a first network, a registration request message including an indicator indicating that a terminal has local access to a second network; receiving, from the first base station, a policy update request message including a cell identifier or an area identifier associated with the second network; updating a policy for the second network on the basis of the policy update request message; and connecting to a second base station of the second network through the local access on the basis of the updated policy.

## Description

### [Technical Field]

The disclosure relates to a wireless communication system and, more specifically, to a method for configuring (steering) a terminal to use local access for a local service in a 3GPP 5G system (5GS). In particular, the disclosure includes a method for, when using a local service by using local access, configuring the local access to use other previously used services.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G.

In the initial stage of 5G mobile communication technologies, in order to support services and to satisfy performance requirements in connection with enhanced Mobile BroadBand, (eMBB), Ultra Reliable Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 preprocessing, and network slicing for providing a dedicated network customized to a specific service.

Currently, there is ongoing discussion regarding improvement and performance enhancement of initial 5G mobile communication technologies in view of services to be supported by 5G mobile communication technologies, and there has been physical layer standardization regarding technologies such as V2X for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is impossible, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure provides a device and a method for transmitting, to a terminal, information indicating whether local access for a local service is available. In addition, the disclosure provides a device and a method for, when a terminal uses a local service by using local access, configuring the local access to use services other than the local service.

### [Solution to Problem]

An operation method of a terminal according to the disclosure may include: transmitting, to a first base station of a first network, a registration request message including an indicator indicating that a terminal has local access to a second network; receiving a policy update request message including an area identifier or a cell identifier related to the second network from the first base station; based on the policy update request message, updating a policy for the second network; and based on the updated policy, connecting to a second base station of the second network via the local access.

An operation method of a terminal according to the disclosure may include: transmitting, to a first base station of a first network, a notification message notifying of entering coverage of a second base station of a second network; receiving a policy update request message from the first base station; and based on the policy update request message, connecting to the second base station. The notification message may include an area identifier or a cell identifier related to the second network and an identifier of the terminal.

A terminal according to the disclosure may include: a transceiver; and a processor coupled to the transceiver. The processor may perform control to: transmit, to a first base station of a first network by using the transceiver, a registration request message including an indicator indicating that the terminal has local access to a second network; receive a policy update request message including an area identifier or a cell identifier related to the second network from the first base station by using the transceiver; based on the policy update request message, update a policy for the second network; and by using the transceiver, connect to a second base station of the second network via the local access, based on the updated local access policy.

### [Advantageous Effects of Invention]

In a wireless communication system according to the disclosure, when entering a specific area corresponding to coverage of a second network, a terminal connected to a first network can identify whether second access for connection to the second network is supported in the specific area. In a wireless communication system according to the disclosure, when entering a specific area corresponding to coverage of a second network, a terminal that receives a first service and a second service via a first network can receive the first service and the second service via connection to the second network in the specific area.

In a wireless communication system according to the disclosure, when leaving a specific area corresponding to coverage of a second network, a terminal that receives a first service and a second device via the second network can receive the first service and the second device via connection to a first network.

### [Brief Description of Drawings]

FIG. 1 is a conceptual diagram illustrating a scenario in which a local service is provided to a terminal 10 via a local network 20 when the terminal 100 is located in a specific area in a wireless communication system according to the disclosure;
FIG. 2 is a conceptual diagram illustrating a method of supporting a local service via a wireless local area network (LAN) in the wireless communication system according to the disclosure;
FIG. 3 is a conceptual diagram illustrating a method of supporting a local service by using local access via a non-public network/new radio (NPN/NR) in the wireless communication system according to the disclosure;
FIG. 4 is a flowchart illustrating a method of supporting a local service by using local access via the NPN in the wireless communication system according to the disclosure;
FIG. 5 is a conceptual diagram illustrating a method by which a home network 10 indicates, to a terminal 100 via an AM NAS, whether a local access search is possible in the wireless communication system according to the disclosure; FIG. 6 is a conceptual diagram illustrating a method by which the home network 10 provides, to the terminal 100 via SIB/RRC, an indicator indicating whether a local access search is possible in the wireless communication system according to the disclosure;
FIG. 7 is a flowchart illustrating a method by which the home network 10 transmits an indicator indicating availability of the local network 20 to the terminal 100 via an SM NAS in the wireless communication system according to the disclosure;
FIG. 8 is a flowchart illustrating a method by which the home network 10 transmits an indicator indicating availability of the local network 20 to the terminal 100 via the AM NAS in the wireless communication system according to the disclosure;
FIG. 9 is a flowchart illustrating a method by which the home network 10 transmits (SIB, RRC Signaling) an indicator indicating availability of the local network 20 to the terminal 100 via AS in the wireless communication system according to the disclosure;
FIG. 10 is a flowchart illustrating a method by which the home network 10 transmits an indicator indicating availability of the local network 20 to the terminal 100 via UP in the wireless communication system according to the disclosure;
FIG. 11 is a flowchart illustrating a method of, when the terminal 100 enters a specific area, performing connection switching to local access after updating a policy in the wireless communication system according to the disclosure;
FIG. 12 is a flowchart illustrating a method of, when the terminal 100 leaves a specific area, performing connection switching to general access after updating a policy in the wireless communication system according to the disclosure;
FIG. 13 is a flowchart illustrating a method of, when the terminal 100 enters a specific area, performing connection switching to local access and then updating a policy in the wireless communication system according to the disclosure;
FIG. 14 is a flowchart illustrating a method of, when the terminal 100 leaves a specific area, performing connection switching to general access and then updating a policy in the wireless communication system according to the disclosure;
FIG. 15 is a block diagram illustrating the terminal 100 in the wireless communication system according to the disclosure;
FIG. 16 is a block diagram illustrating a gNB 210 of a first network 10 in the wireless communication system according to the disclosure;
FIG. 17 is a block diagram illustrating a UPF 310 of the first network 10 in the wireless communication system according to the disclosure;
FIG. 18 is a block diagram illustrating an AMF 410 of the first network 10 in the wireless communication system according to the disclosure;
FIG. 19 is a block diagram illustrating an SMF 510 of the first network 10 in the wireless communication system according to the disclosure;
FIG. 20 is a block diagram illustrating a PCF 610 of the first network 10 in the wireless communication system according to the disclosure;
FIG. 21 is a block diagram illustrating a UDR/UDM 710 of the first network 10 in the wireless communication system according to the disclosure;
FIG. 22 is a block diagram illustrating an NEF 810 of the first network 10 in the wireless communication system according to the disclosure;
FIG. 23 is a block diagram illustrating an NF 910 of the first network 10 in the wireless communication system according to the disclosure;
FIG. 24 is a block diagram illustrating an L-gNB 220 of a second network 20 in the wireless communication system according to the disclosure;
FIG. 25 is a block diagram illustrating an L-UPF 320 of the second network 20 in the wireless communication system according to the disclosure;
FIG. 26 is a block diagram illustrating an L-AMF 420 of the second network 20 in the wireless communication system according to the disclosure;
FIG. 27 is a block diagram illustrating an L-SMF 520 of the second network 20 in the wireless communication system according to the disclosure;
FIG. 28 is a block diagram illustrating an L-PCF 620 of the second network 20 in the wireless communication system according to the disclosure;
FIG. 29 is a block diagram illustrating an L-UDR/UDM 720 of the second network 20 in the wireless communication system according to the disclosure; and
FIG. 30 is a block diagram illustrating an L-NF 920 of the second network 20 in the wireless communication system according to the disclosure.

### [Mode for the Invention]

Hereinafter, the operation principle the disclosure will be described in detail with reference to the accompanying drawings. In the following description of the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used.

In the following description of the disclosure, terms and names specified in the 5GS and NR standards, which are the latest standards defined by the 3rd generation partnership project (3GPP) group among the existing communication standards, will be used for the sake of descriptive convenience. However, the disclosure is not limited by these terms and names, and may be applied in the same way to systems that conform other standards. In particular, the disclosure may be applied to 3GPP 5GS/NR (5th generation mobile communication standards).

In a wireless communication system according to the disclosure, when a terminal is located in the specific area, a service available only in the specific area may be provided using an access method available only in the specific area.

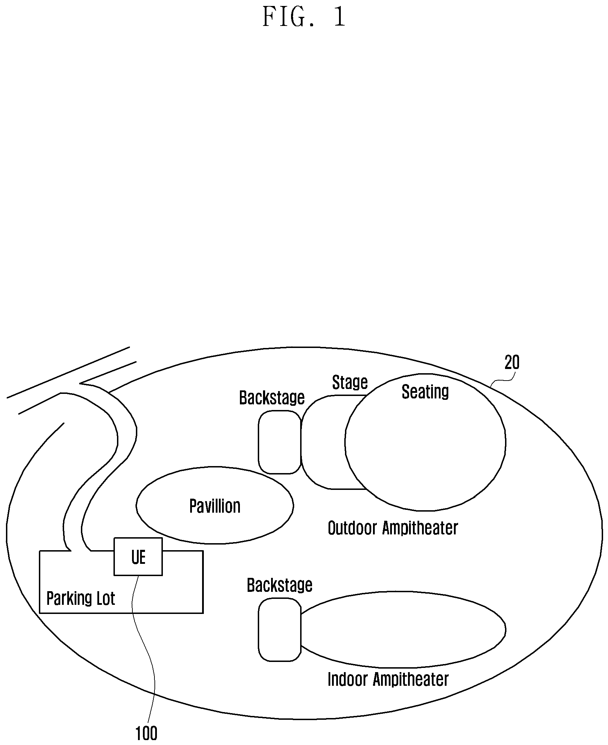

FIG. 1 is a conceptual diagram illustrating a scenario in which a local service is provided to a terminal 10 via a local network 20 when the terminal 100 is located in a specific area in a wireless communication system according to the disclosure.

Referring to FIG. 1, when an exhibition is being held in a specific area, a visitor holding the terminal 100 may enter a parking lot of a pavilion. The terminal 100 having entered the specific area may use a local service, such as a map of inside the pavilion, audio/video broadcasting of an outdoor amphitheater, and audio/video sharing of an indoor amphitheater, which may be used at the pavilion. For example, the terminal 100 may receive the local service via the local network 20 covering the specific area. For example, the terminal 100 may be connected to the local network 20 via access available in the pavilion so as to receive the local service.

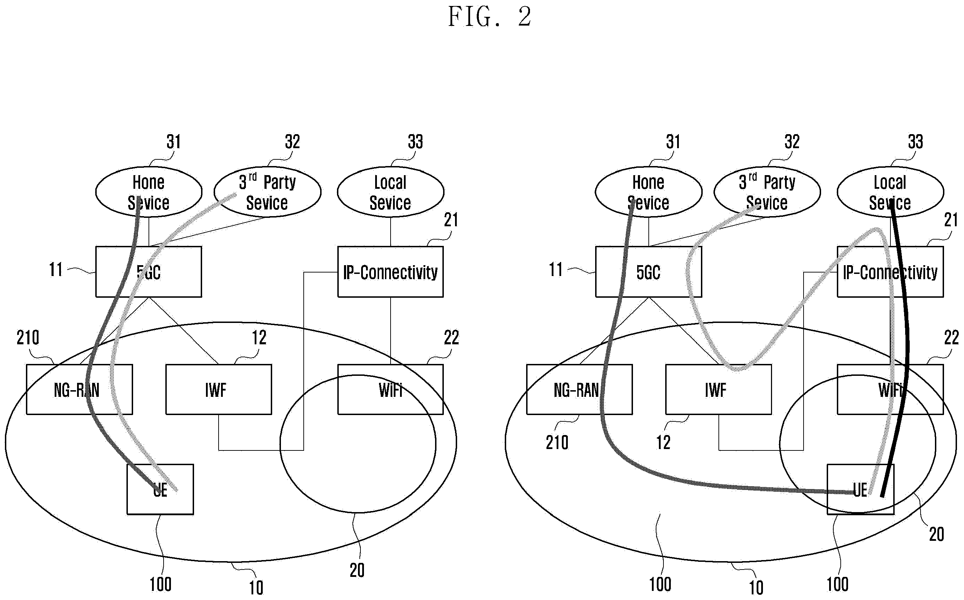

FIG. 2 is a conceptual diagram illustrating a method of supporting a local service via a wireless local area network (LAN) in the wireless communication system according to the disclosure.

Referring to FIG. 2, the wireless communication system according to the disclosure may include a first network 10 and a second network 20. For example, the first network may be referred to as a home network, a global network, a public network, or a general network. The second network 20 may be referred to as a local network or a non-public network. For example, the wireless communication system according to the disclosure may be a 5G system. For example, the second network 20 may be the same as the local network 20 of FIG. 1.

The home network 10 may include a 5GC (core) 11, an interworking function (IWF) 12, and an NG-RAN 210. The 5GC 11 may be connected to a home service server 31 and a third operator service server 32. When the terminal 100 enters coverage of the next generation radio access network (NG-RAN) 210, the NG-RAN 210 may provide the terminal 100 with public access for connection to the public network 10. Public access may refer to a wireless channel for accessing the public network 10. For example, public access may be referred to as global access or general access. For example, the terminal 100 may be connected to the NG-RAN 210 via global access. For example, the terminal 100 may receive a service from at least one of the home service server 31 and the third operator service server 32 via global access.

The local network 20 may include an IP connectivity network 21 and a wireless LAN 22. The IP connectivity network 21 may be connected to a local service server 33. The wireless LAN 22 may be a node using a Wi-Fi scheme. The wireless LAN 22 may be referred to as a Wi-Fi node. The Wi-Fi node 22 may provide local access to the terminal 100 when the terminal 100 enters coverage of the Wi-Fi node 22. Local access may refer to a wireless channel for accessing the local network 20. For example, the terminal 100 may be connected to the Wi-Fi node 22 via local access. For example, the terminal 100 may receive a local service from the local service server 33 via local access.

Referring to (a) of FIG. 2, the terminal 100 is located within the coverage of the NG-RAN 210, but may be located outside the coverage of the Wi-Fi node 22. For example, the coverage of NG-RAN 210 may include the coverage of Wi-Fi node 22. In this case, the terminal 100 may receive a service from at least one of the home service server 31 and the third operator service server 32 via global access, but may not receive a service from the local service server 33.

Referring to (b) of FIG. 2, the terminal 100 may be located within the coverage of the Wi-Fi node 22 in the coverage of the NG-RAN 210. In this case, the terminal 100 may receive a local service from the local service server 33 via the Wi-Fi node 22. For example, the IWF 12 may be connected to the 5GC 11 and the IP connectivity network 21. The Wi-Fi node 22 may be connected to the third operator service server 33 via the IWF 12 connected to the IP connectivity network 21. The terminal 100 located within the coverage of the Wi-Fi node 22 may receive a service from the third operator service server 33 via the Wi-Fi node 22.

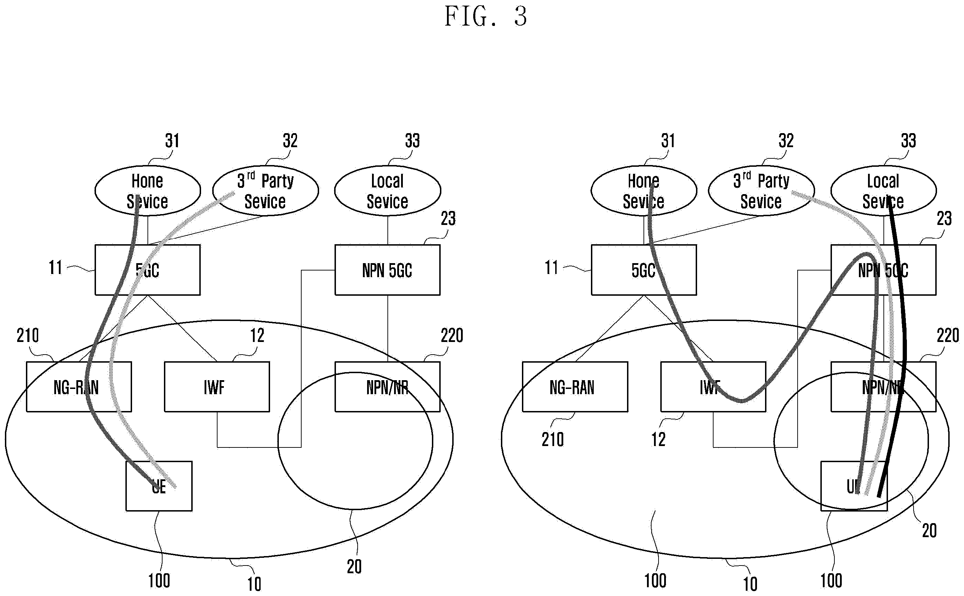

FIG. 3 is a conceptual diagram illustrating a method of supporting a local service by using local access via a non-public network/new radio (NPN/NR) in the wireless communication system according to the disclosure.

Referring to FIG. 3, the local network 20 may include an NPN 5GC 23 and an NPN/NR 220. The NPN 5GC 23 may be connected to the third operator service server 32 and the local service server 33. The NPN/NR 220 may provide local access to the terminal 100 when the terminal 100 enters coverage of the NPN/NR 220. For example, the terminal 100 may be connected to the NPN/NR 220 via local access. For example, the terminal 100 may receive a local service from at least one of the third operator service server 32 and the local service server 33 via local access.

Referring to (a) of FIG. 2, the terminal 100 is located within the coverage of the NG-RAN 210, but may be located outside the coverage of the NPN/NR 220. In this case, the terminal 100 may receive a service from at least one of the home service server 31 and the third operator service server 32 via global access, but may not receive a service from the local service server 33.

Referring to (b) of FIG. 3, the terminal 100 may be located within the coverage of the NPN/NR 220 in the coverage of the NG- RAN 210. In this case, the terminal 100 may receive a service from at least one of the home service server 31, the third operator service server 32, and the local service server 33 via local access. For example, the terminal 100 may receive a local service from at least one of the third operator service server 32 and the local service server 33 via the NPN/NR 220. In addition, the terminal 100 may receive a service from the home service server 31 via the NPN/NR 220.

In this case, the terminal 100 may further change whether to connect to the home service server 31 and the third operator service server 32 via global access or connect to the same via local access. For example, the terminal 100 may use, for connection to the home service server 31, global access via the NG-RAN 210, may use, for connection to the third operator service server 32, local access via the NPN/NR 220, and then may be connected to the 5GC 21 of the home network 10 by using the non-3GPP IWF 12.

A method to implement this requires (1) notifying the terminal of whether local access is available, (2) updating a policy of the terminal when local access is available, and (3) updating local access information from the local network 10 to the home network 10.
(1) A method of notifying the terminal 100 of information on whether local access is available may include the following options.
   A. Local access air search: The terminal 100 may directly identify, via a local access air search method, that the local network 20 may be used via local access. When a wireless local access method is applied, the terminal 100 may use one of local access or global access. For example, the terminal 100 may use local access and global access by periodically switching between the same.
   B. Global access air search: A cell ID. A corresponding cell includes a system information (SI) local access list (1B1. enabling local access air search if a condition is satisfied)
      B1. Local access search enabled (turning on a function of the terminal 100, providing an indicator (indication) to turn on a function of the terminal 100): Via a method of indicating whether local access search is possible, the terminal 100 may, when connected to the home network 10 via global access, periodically search for local access only when local access search is necessary. Accordingly, since the terminal 100 may not search for local access in an area where local access is not provided, wireless communication efficiency may be increased.
         - B11 SM NAS use: SM NAS may be used when a PDU session is established. When transmitting a message to the idle terminal 100, paging may be necessary.
         - B12 AM NAS use: AM NAS may be used even when a PDU session is not established. When transmitting a message to the idle terminal 100, paging may be necessary.
         - B13 AS (SIB/RRC) use: When broadcast via SIB, a message may be transmitted to the idle terminal 100 without paging.
      B2. Notifying the terminal 100 of whether local access is available (providing a list to the terminal 100 (push scheme/pull scheme)): The terminal 100 may quickly access the local network 20 via local access while being connected to the home network 10 via global access.
         - B21 SM NAS use: SM NAS may be used when a PDU session is established. When transmitting a message to the idle terminal 100, paging may be necessary.
         - B22 AM NAS use: AM NAS may be used even when a PDU session is not established. When transmitting a message to the idle terminal 100, paging may be necessary.
         - B23 AS (SIB/RRC): When broadcast via SIB, transmission may be performed to the idle terminal 100 without paging.
         - B24 AF UP: General user traffic is used rather than signaling traffic, and thus implementation may be performed without changing a communication network.
   C. Third air search: GPS (1C1. enabling local access air search if a GPS condition is satisfied)
      C1. Local access search enabled (turning on a function of the terminal 100, turning off a function of the terminal 100 when the terminal 100 leaves a local access area): When local access needs to be searched for based on a third wireless device such as a GPS, since local access is searched for periodically, wireless communication efficiency may be increased in an area other than an area where local access is provided.
      C2. Notifying the terminal 100 of whether local access is available (providing a list to the terminal 100 (pull scheme)): Based on a third wireless device such as a GPS, the terminal 100 may quickly access the local network 20 via local access.
(2) A method of updating a policy of the terminal 100 when local access is available is as follows.
   A. Updating a policy of the terminal 100 according to increase/decrease of a signal for local access, and then switching access: Since the terminal 100 updates a policy for new access in advance and then is connected to a network via the access, the terminal 100 may, after connecting to the new access, quickly transmit or receive traffic according to an optimal policy without delay. Access switching for the access may be possible after updating the policy in advance.
   B. Switching access according to increase/decrease of a signal for local access, and then updating a policy of the terminal 100: The terminal 100 may perform connection switching to new access and then update the policy in advance. After updating of the policy, a traffic transfer path for the terminal 100 may be changed according to the optimal policy. Since there is no need to update the policy in advance, if the terminal 100 is capable of switching access, a delay time is not generated until access switching.
(3) A method for the local network 20 to update local access information in the home network 10 is as follows.
   A. AF or separate NF use: An interworking method provided by the home network 10 may be used, so that implementation is possible by modification of the home network 10.
   B. Using a common NF (e.g., security proxy) by using control plane interworking: Modification for the local network 20 and the home network 10 may be required.

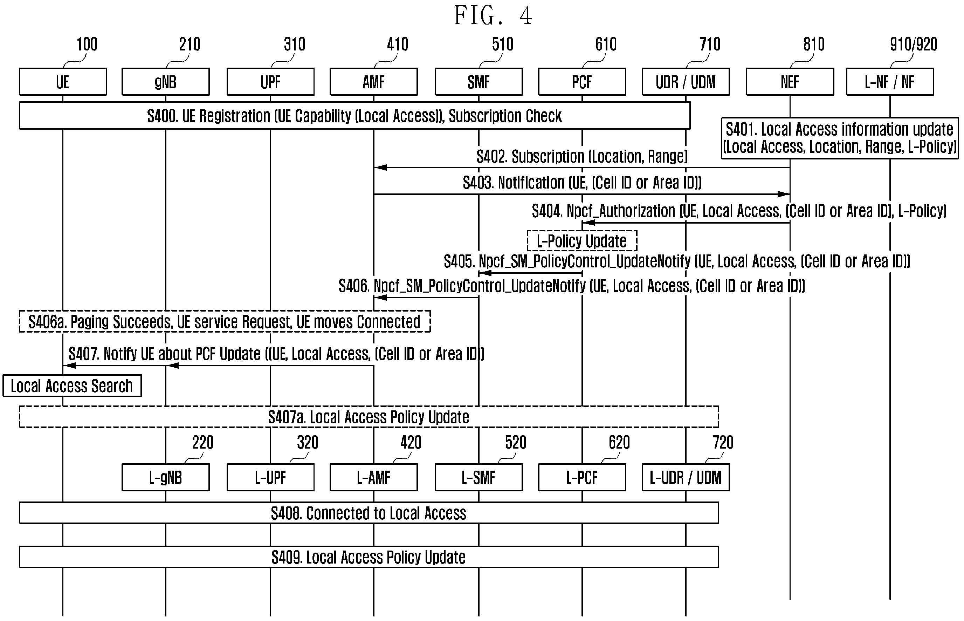

FIG. 4 is a flowchart illustrating a method of supporting a local service by using local access via the NPN in the wireless communication system according to the disclosure.

According to the disclosure, when using global access, the terminal 100 periodically searches for local access only when it is necessary to search for local access, so that the terminal 100 does not search for local access in an area where local access is not supported, thereby increasing wireless efficiency. The disclosure may be used when a PDU session is established. When a policy is transmitted to the idle terminal 100, paging may be necessary. Since the terminal 100 performs connection switching to new access and then updates the policy in advance, the terminal 100 may transmit or receive traffic according to an optimal policy after connecting to the new access. After the policy is updated, a traffic transmission/reception path may be changed according to the optimal policy. Since the terminal 100 does not need to update the policy in advance, when connection switching to the access is possible, a delay time is not generated until access switching. In the disclosure, an interworking method provided by the home network 10 may be used, so that implementation is possible by modification of the home network 100.

Referring to FIG. 4, the wireless communication system may be the same as or similar to the wireless communication system of FIG. 2 and FIG. 3.

For example, the home network 10 may include a gNB 210, a UPF 310, an AMF 410, an SMF 510, a PCF 610, a UDR/UDM 710, an NEF 810, and an NF 920. For example, the gNB 210 may be the NG-RAN 210 of FIG. 2 and FIG. 3. The UPF 310, the AMF 410, the SMF 510, the PCF 610, the UDR/UDM 710, the NEF 810, and the NF 920 may be included in the 5GC 11 of FIG. 2 and FIG. 3.

The local network 20 may include an L-gNB 220, an L-UPF 320, an L-AMF 420, an L-SMF 520, an L-PCF 620, an L-UDR/UDM 720, and an L-NF 720. For example, the L-gNB 220 may be the NPN/NR 220 of FIG. 2 and FIG. 3. The L-UPF 320, the L-AMF 420, the L-SMF 520, the L-PCF 620, the L-UDR/UDM 720, and the L-NF 720 may be included in the NPN 5GC 23 of FIG. 2 and FIG. 3.

Via registration of the terminal 100 in operation S400, the gNB 210, the UPF 310, the AMF 410, the SMF 510, the PCF 610, and the UDR/UDM 710 may determine whether the terminal 100 is able to receive a local service via local access, based on capability information and subscriber information of the terminal 100.

In operation S401, the NF 910 of the home network 10 or the NF (L-NF) 920 of the local network 20 may update local access information. For example, when the NF 910 or the L-NF 920 recognizes the local network 20 as an external network, the local access information may be updated via the NEF 810. When the NF 910 or L-NF 920 recognizes the local network 20 as an internal network, the local access information may be updated without going through the NEF 810. For example, local network information may include the local access information, location information, and policy information. The local access information may include information on a radio technology and an ID related to the local network 20. The location information may include a range and coordinates related to the local network 20. The policy information may indicate access to connect to a home service 410, a third operator service 42, and a local service 43. For example, the policy information may indicate at least one of global access or local access.

In operation S402, the NEF 810 may transmit a subscription message to the AMF 410. The AMF 410 may receive the subscription message from the NEF 810. For example, the subscription message may include location information (coordinates and range) related to local access. When at least one terminal is located within the range of the location information related to local access, the subscription message may include an indicator for requesting to notify that the at least one terminal is located within the range of the location information related to local access.

In operation S403, the AMF 510 may transmit a notification message to the NEF 810. For example, the AMF 510 may generate the notification message, based on the subscription message. For example, the notification message may include a cell ID or area ID and terminal information on the at least one terminal located within the range of location information related to the local network 20. The NEF 810 may receive the notification message from the AMF 510. For example, the terminal 100 may be located within the range of the location information related to the local network 20.

In operation S404, the NEF 810 may transmit an Npcf authorization message to the PCF 610. The PCF 610 may receive the Npcf authorization message from the NEF 810. The Npcf authorization message may include an indicator for requesting to update the policy for the terminal 100. For example, the Npcf authorization message may include policy information (L-Policy) indicating an access scheme for connection to the home service 41, the third operator service 42, and the local service 43, the location information including the cell ID or area ID, the local access information, and terminal information related to the terminal 100. The PCF 610 may update a policy for local access, based on the Npcf authorization message.

In operation S405, the PCF 610 may transmit a policy update request message (Npcf SM PolicyControl UpdateNotify) to the SMF 510. The SMF 510 may receive the policy update request message from the PCF 610. For example, the policy update request message may include the cell ID or area ID, the local access information, and the terminal information related to the terminal 100.

In operation S406, the SMF 510 may transmit the policy update request message to the AMF 410. The AMF 410 may receive the policy update request message from the SMF 510. The policy update request message may include an indicator for requesting to transfer the policy update request message to the terminal 100. For the idle terminal 100, in operation S406a, the terminal 100, the gNB 210, the UPF 310, and the AMF 410 may perform paging.

In operation S407, the AMF 410 may transmit the policy update request message to the terminal 100 via the gNB 210. For example, the AMF 410 may transmit the policy update request message to the gNB 210. The gNB 210 may receive the policy update request message from the AMF 410. The gNB 210 may transmit the policy update request message to the terminal 100. The terminal 100 may receive the policy update request message from the gNB 210. The policy update request message may include the cell ID or area ID, the local access information, and the terminal information related to the terminal 100. The terminal 100 may turn on a local access search function for accessing the local network 20, based on the policy update request message.

In operation S407a, the terminal 100, the gNB 210, the UPF 310, the AMF 410, the SMF 510, the PCF 610, and the UDR/UDM 710 may update the policy information (L-Policy) of the terminal 100, which indicates an access scheme for connection to the home service server 31, the third operator service server 32, and the local access server 33.

In operation S408, the terminal 100 may be connected to the L-gNB 220 via local access after turning on the local access search function. The terminal 100 may be connected to the L-UPF 320, the L-AMF 420, the L-SMF 520, the L-PCF 620, and the L-UDR/UDM 720 via the L-gNB 220.

In operation S409, the terminal 100, the L-gNB 220, the L-UPF 320, the L-AMF 420, the L-SMF 520, the L-PCF 620, and the L-UDR/UDM 720 may update the policy information (L-Policy) of the terminal 100. For example, the policy information of the terminal 100 may include an indicator indicating the access scheme for connection to the home service server 31, the third operator service server 32, and the local service server 33. For example, the indicator indicating the access scheme may indicate at least one of global access and local access.

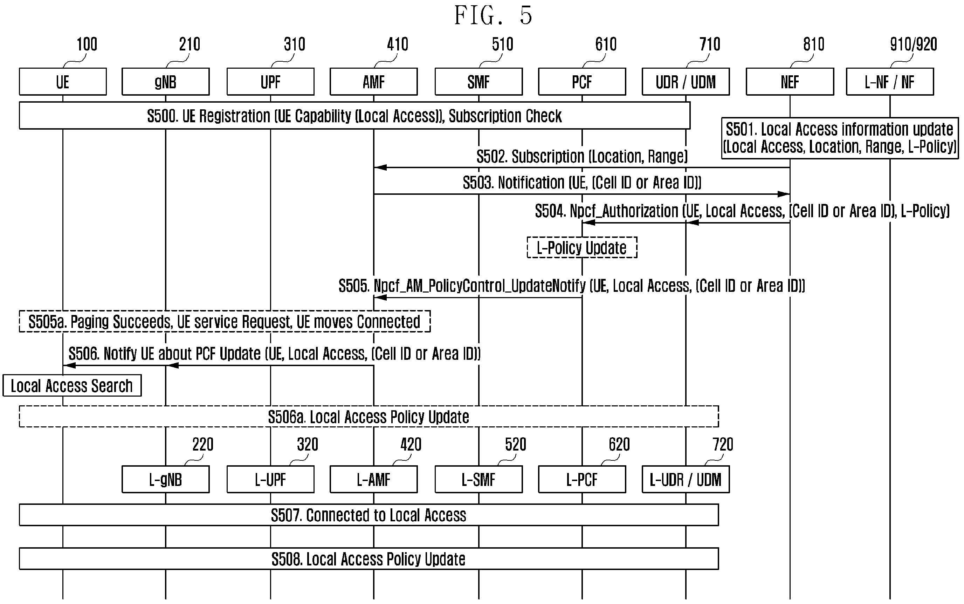

FIG. 5 is a flowchart illustrating a method by which the home network 10 indicates, to the terminal 100 via the AM NAS, whether a local access search is possible in the wireless communication system according to the disclosure.

According to the disclosure, when using global access, the terminal 100 periodically searches for local access only when it is necessary to search for local access, so that the terminal 100 does not search for local access in an area where local access is not supported, thereby increasing wireless efficiency. The method according to the disclosure may be used even when a PDU is not established. When a policy is transmitted to the idle terminal 100, paging may be necessary. Since the terminal 100 performs connection switching to new access and then updates the policy in advance, the terminal 100 may transmit or receive traffic according to an optimal policy after connecting to the new access. After updating of the policy, a traffic transmission/reception path may be changed according to the optimal policy. Since the terminal 100 does not need to update the policy in advance, when connection switching to the access is possible, a delay time may not be generated until access switching. According to the disclosure, an interworking method provided by the home network 10 may be used, so that implementation is possible by modification of the home network 10.

Referring to FIG. 5, via registration of the terminal 100 in operation S500, the gNB 210, the UPF 310, the AMF 410, the SMF 510, the PCF 610, and the UDR/UDM 710 may determine whether the terminal 100 is able to receive a local service via local access, based on capability information and subscriber information of the terminal 100.

In operation S501, the NF 910 of the home network 10 or the L-NF 920 of the local network 20 may update local access information via the NEF 810. For example, when the local network 20 is recognized as an internal network rather than an external network, the NF 910 or the L-NF 920 may update the local access information without going through the NEF 810. For example, the local access information may include local access-related information including a radio technology and an ID of the local network 10, location information including a range and coordinates, and policy information (L-Policy) indicating an access path for connection to the home service server 31, the third operator service server 32, and the local service server 33.

In operation S502, the NEF 810 may transmit, to the AMF 410, a subscription message including the location information (coordinates and range) related to local access. The AMF 410 may receive, from the NEF 810, the subscription message including the location information (coordinates and range) related to local access. When at least one terminal is located within the range of the location information (coordinates and range) related to local access, the subscription message may include an indicator for requesting to notify that the at least one terminal is located within the range of the location information (coordinates and range).

In operation S503, the AMF 410 may transmit a notification message to the NEF 810. For example, the AMF 510 may generate the notification message, based on the subscription message. For example, the notification message may include a cell ID or area ID and terminal information on the at least one terminal located within the range of the location information related to local access. The NEF 810 may receive the notification message from the AMF 410.

In operation S504, the NEF 810 may transmit an Npcf authorization message to the PCF 610 via the UDR/UDM 710. For example, the NEF 810 may generate the Npcf authorization message, based on the notification message. The Npcf authorization message may include an indicator for requesting to update the policy for the terminal 100. For example, the Npcf authorization message may include policy information (L-Policy) indicating an access scheme for connection to the home service server 31, the third operator service server 32, and the local service server 33, the location information including the cell ID or area ID, the local access information, and terminal information related to the terminal 100. The NEF 810 may transmit the Npcf authorization message to the UDR/UDM 710. The UDR/UDM 710 may receive the Npcf authorization message from the NEF 810. The UDR/UDM 710 may transmit the Npcf authorization message to the PCF 610. The PCF 610 may receive the Npcf authorization message from the NEF 810. For example, the PCF 610 may update the policy for local access, based on the Npcf authorization message (L-Policy Update).

In operation S505, the PCF 610 may transmit a policy update request message (Npcf AM PolicyControl UpdateNotify) to the AMF 410. The AMF 410 may receive the policy update request message from the PCF 610. For example, the policy update request message may include the cell ID or area ID, the local access information, and the terminal information related to the terminal 100. For the idle terminal 100, in operation S505a, paging for the terminal 100 may be performed.

In operation S506, the AMF 410 may transmit a policy update message to the terminal 100 via the gNB 210 (Notify UE about PCF Update). For example, the AMF 410 may generate the policy update message, based on the policy update request message. For example, the policy update message may include the cell ID or area ID, the local access information, and the terminal information related to the terminal 100. The terminal 100 may receive the policy update message from the AMF 410 via the gNB 210. The terminal 100 may turn on a search function for local access, based on the policy update message.

In operation S506a, the terminal 100, the gNB 210, the UPF 310, the AMF 410, the SMF 510, the PCF 610, and the UDR/UDM 710 may update the policy information (L-Policy) of the terminal 100. For example, the policy information may include the indicator indicating the access scheme for connection to the home service server 31, the third operator service server 32, and the local service server 33.

In operation S507, the terminal 100 may turn on the search function for local access, and then may be connected to the L-gNB 220 via local access. The terminal 100 may be connected to the L-UPF 320, the L-AMF 420, the L-SMF 520, the L-PCF 620, and the L-UDR/UDM 720 via the L-gNB 220.

In operation S509, the terminal 100, the L-gNB 220, the L-UPF 320, the L-AMF 420, the L-SMF 520, the L-PCF 620, and the L-UDR/UDM 720 may update the policy information (L-Policy) of the terminal 100. For example, for connection to the home service server 31, the third operator service server 32, and the local service server 33, the policy information of the terminal 100 may include an indicator indicating whether to use global access or local access.

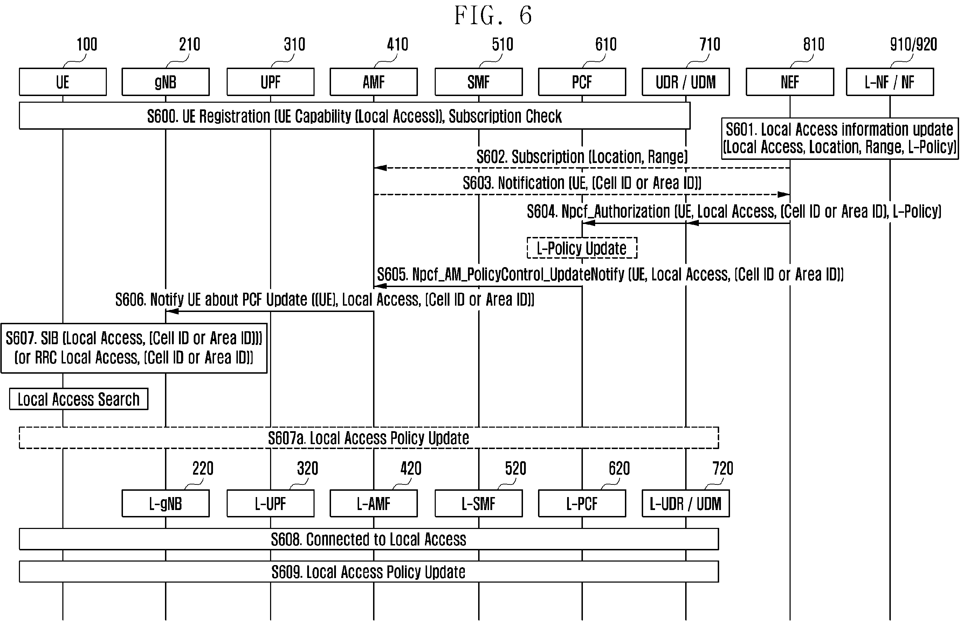

FIG. 6 is a conceptual diagram illustrating a method by which the home network provides, to the terminal via SIB/RRC, an indicator indicating whether a local access search is possible in the wireless communication system according to the disclosure.

According to the disclosure, when using global access, the terminal 100 periodically searches for local access only when it is necessary to search for local access, so that the terminal 100 does not search for local access in an area where local access is not supported, thereby increasing wireless efficiency. When a policy is broadcast via SIB, paging may be omitted also for a case where the policy is transmitted to the idle terminal 100. Since the terminal 100 performs connection switching to new access and then updates the policy in advance, the terminal 100 may transmit or receive traffic according to an optimal policy after connecting to the new access. After updating of the policy, a traffic transmission/reception path may be changed according to the optimal policy. Since the terminal 100 does not need to update the policy in advance, when connection switching to the access is possible, a delay time may not be generated until access switching. In the disclosure, an interworking method provided by the home network 10 may be used, so that implementation is possible by modification of the home network 10.

Referring to FIG. 6, via registration of the terminal 100 in operation S600, the gNB 210, the UPF 310, the AMF 410, the SMF 510, the PCF 610, and the UDR/UDM 710 may determine whether the terminal 100 is able to receive a local service via local access, based on capability information and subscriber information of the terminal 100.

In operation S601, the NF 910 of the home network 10 or the L-NF 920 of the local network 20 may update local access information via the NEF 810. When the local network 20 is recognized as an internal network rather than an external network, the NF 910 or the NF 920 may perform updating without going through the NEF 810. For example, the local access information may include local access-related information including a radio technology and an ID of the local network 10, location information including a range and coordinates, and policy information (L-Policy) indicating an access path for connection to the home service server 31, the third operator service server 32, and the local service server 33.

In operation S602, the NEF 810 may transmit a subscription message to the AMF 410. The AMF 410 may receive the subscription message from the NEF 810. When at least one terminal is located within the range of the location information (coordinates and range) related to local access, the subscription message may include an indicator for requesting to notify that the at least one terminal is located within the range of the location information (coordinates and range) related to local access.

In operation S603, the AMF 410 may transmit a notification message to the NEF 810. The NEF 810 may receive the notification message from the AMF 410. For example, the notification message may include a cell ID or area ID and terminal information on the at least one terminal located within the range of the location information (coordinates and range) related to local access. For example, the terminal 100 may be located within the range of the location information (coordinates and range) related to local access.

In operation S604, the NEF 810 may transmit an Npcf authorization message to the PCF 610 via the UDR/UDM 710. For example, the NEF 810 may generate the Npcf authorization message, based on the notification message. The Npcf authorization message may include an indicator for requesting to update the policy for the terminal 100. For example, the Npcf authorization message may include terminal information, the local access information, the location information including the cell ID or area ID, and policy information indicating an access scheme for connection to the home service server 31, the third operator service server 32, and the local service server 33. The NEF 810 may transmit the Npcf authorization message to the UDR/UDM 710. The UDR/UDM 710 may receive the Npcf authorization message from the NEF 810. The UDR/UDM 710 may transmit the Npcf authorization message to the PCF 610. The PCF 610 may receive the Npcf authorization message from the NEF 810. The PCF 610 may update a policy for local access, based on the Npcf authorization message.

In operation S605, the PCF 610 may transmit a policy update request message (Npcf_AM_PolicyControl_UpdateNotify) to the AMF 410. The AMF 410 may receive the policy update request message (Npcf_AM_PolicyControl_UpdateNotify) from the PCF 610. The policy update request message may include the terminal information, the local access information, and the cell ID or area ID. For the idle terminal 100, the same paging as that in operation S505a of FIG. 5 may be performed.

In operation S606, the AMF 410 may transmit updated context information of the terminal 100 to the gNB 210. The gNB 210 may receive the updated context information of the terminal 100 from the AMF 410. The context information may include the terminal information, the local access information, and the cell ID or area ID.

In operation S607, the gNB 210 may transmit a system information broadcast (SIB) message or an RRC message to the terminal 100. The terminal 100 may receive the SIB message or the RRC message from the gNB 210. For example, the SIB message may include an indicator indicating to use local access. For example, the RRC message may include an indicator indicating to use local access. For example, the indicator indicating to use local access may include the cell ID or area ID.

The terminal 100 may turn on a search function for local access, based on the SIB message or the RRC message.

In operation S607a, the terminal 100, the gNB 210, the UPF 310, the AMF 410, the SMF 510, the PCF 610, and the UDR/UDM 710 may update the policy information (L-Policy) of the terminal 100. For example, the policy information may include the indicator indicating the access scheme for connection to the home service server 31, the third operator service server 32, and the local service server 33.

In operation S608, the terminal 100 may turn on the search function for local access, and then may be connected to the L-gNB 220 via local access. The terminal 100 may be connected to the L-UPF 320, the L-AMF 420, the L-SMF 520, the L-PCF 620, and the L-UDR/UDM 720 via the L-gNB 220.

In operation S609, the terminal 100, the L-gNB 220, the L-UPF 320, the L-AMF 420, the L-SMF 520, the L-PCF 620, and the L-UDR/UDM 720 may update the policy information (L-Policy) of the terminal 100. For example, for connection to the home service server 31, the third operator service server 32, and the local service server 33, the policy information of the terminal 100 may include an indicator indicating whether to use global access or local access.

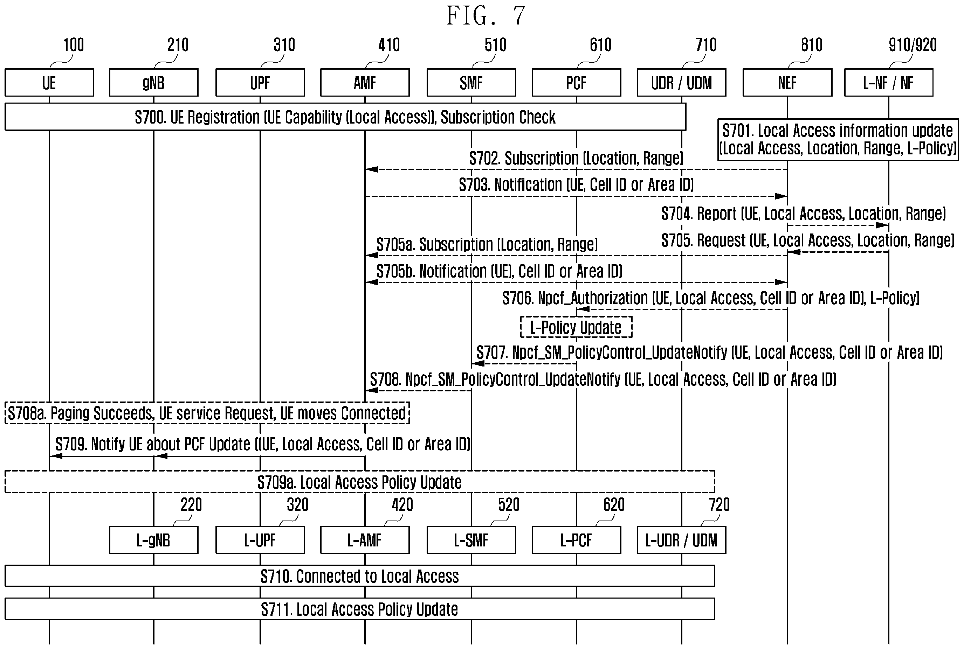

FIG. 7 is a flowchart illustrating a method by which the home network 10 transmits an indicator indicating availability of the local network 20 to the terminal 100 via the SM NAS in the wireless communication system according to the disclosure.

According to the disclosure, the terminal 100 may be quickly connected to local access while using global access. The method according to the disclosure may be used when a PDU session is established. When a policy is transmitted to the idle terminal 100, paging may be necessary. Since the terminal 100 performs connection switching to new access and then updates the policy in advance, the terminal 100 may transmit or receive traffic according to an optimal policy after connecting to the new access. After updating of the policy, a traffic transmission/reception path may be changed according to the optimal policy. Since the terminal 100 does not need to update the policy in advance, when connection switching to the access is possible, a delay time may not be generated until access switching. For the method according to the disclosure, an interworking method provided by the home network 10 may be used, so that implementation is possible by modification of the home network 10.

Referring to FIG. 7, via registration of the terminal 100 in operation S700, the gNB 210, the UPF 310, the AMF 410, the SMF 510, the PCF 610, and the UDR/UDM 710 may determine whether the terminal 100 is able to receive a local service via the local network 20, based on capability information and subscriber information of the terminal 100.

In operation S701, the NF 910 of the home network 10 or the L-NF 920 of the local network 20 may update local access information via the NEF 810. When the local network 20 is recognized as an internal network rather than an external network, the NF 910 or the L-NF 920 may perform updating without going through the NEF 810. For example, local network information may include the local access information, location information, and policy information. The local access information may include information on a radio technology and an ID related to the local network 20. The location information may include a range and coordinates related to the local network 20. The policy information may indicate access to connect to the home service 410, the third operator service 42, and the local service 43. For example, the policy information may indicate at least one of global access or local access.

In operation S702, the NEF 810 may transmit a subscription message to the AMF 410. For example, the NEF 810 may generate the subscription message, based on the updated local access information. The AMF 410 may receive the subscription message from the NEF 810. When at least one terminal is located within the range of the location information (coordinates and range) related to the local network 20, the subscription message may include an indicator for requesting to notify that the at least one terminal is located within the range of the location information.

In operation S703, the AMF 410 may transmit a notification message to the NEF 810. For example, the AMF 410 may generate the notification message, based on the subscription message. The NEF 810 may receive the notification message from the AMF 410. For example, the notification message may include a cell ID or area ID and terminal information on the at least one terminal located within the range of the location information (coordinates and range) related to the local network 20. For example, the terminal 100 may be located within the range of the location information (coordinates and range) related to the local network 20.

In operation S704, the NEF 810 of the home network 10 may transmit a report message to the L-NF 920 of the local network 20. For example, the NEF 810 may generate the report message, based on the notification message. The L-NF 920 may receive the report message from the NEF 810. For example, the report message may include an indicator indicating that the terminal 100 is located within the range of the location information (coordinates and range) related to the local network 20. For example, the report message may include information relating to the range, location, local access information, and an ID of the terminal 100.

In operation S705, the L-NF 920 of the local network 20 may transmit a request message to the NEF 910 of the home network 10. For example, the L-NF 920 may generate the request message, based on the report message. The NEF 910 may receive a response message from the L-NF 920. The request message may include an indicator for requesting policy update and transmission of a local access indicator for the terminal 100. For example, the request message may include information relating to the range, location, local access information, and the ID of the terminal 100.

In operation S705a, the NEF 910 may transmit a subscription message to the AMF 410. For example, the NEF 910 may generate the subscription message, based on the request message. The AMF 410 may receive the subscription message from the NEF 910. For example, when at least one terminal is located within the range of the location information (coordinates and range) related to local access, the subscription message may include an indicator for requesting to notify that the at least one terminal is located within the range of the location information.

In operation S705b, the AMF 410 may transmit a notification message to the NEF 81. For example, the AMF 410 may generate the notification message, based on the subscription message. The NEF 81 may receive the notification message from the AMF 410. The notification message may include terminal information on the terminal 100, an ID of a cell or area in which the terminal 100 is located, and the like.

In operation S706, the NEF 810 may transmit an Npcf authorization message to the PCF 610. For example, the NEF 810 may generate the Npcf authorization message, based on the notification message. The PCF 610 may receive the Npcf authorization message from the NEF 810. The Npcf authorization message may include an indicator for requesting to update the policy for the terminal 100. For example, the Npcf authorization message may include policy information (L-Policy) indicating an access path for connection to the home service server 31, the third operator service server 32, and the local service server 33, the location information including the cell ID or area ID, the local access information, and the terminal information related to the terminal 100. The PCF 610 may update a policy for local access, based on the Npcf authorization message.

In operation S707, the PCF 610 may transmit a policy update request message (Npcf_SM_PolicyControl_UpdateNotify) to the SMF 510. For example, the PCF 610 may generate the policy update request message, based on the updated policy for local access. The SMF 510 may receive the policy update request message from the PCF 610. For example, the policy update request message may include the cell ID or area ID, the local access information, and the terminal information related to the terminal 100.

In operation S708, the SMF 510 may transmit the policy update request message (Npcf_SM_PolicyControl_UpdateNotify) to the AMF 410. For example, the policy update request message may include an indicator for requesting to transmit policy update information to the terminal 100. The AMF 410 may receive the policy update request message from the SMF 510.

For the idle terminal 100, the same paging as that in operation S708a may be performed.

In operation S709, the policy update request message may be transmitted from the AMF 410 to the terminal 100 via the gNB 210. For example, the AMF 410 may transmit the policy update request message to the gNB 210. The gNB 210 may receive the policy update request message from the AMF 410. The gNB 210 may transmit the policy update request message to the terminal 100. The terminal 100 may receive the policy update request message from the gNB 210. The policy update request message may include the cell ID or area ID, the local access information, and the terminal information related to the terminal 100. The terminal 100 may turn on a local access search function, based on the policy update request message.

In operation S709a, the terminal 100, the L-gNB 220, the L-UPF 320, the L-AMF 420, the L-SMF 520, the L-PCF 620, and the L-UDR/UDM 720 may update the policy information (L-Policy) of the terminal 100. For example, the policy information may include an indicator indicating an access path for connection to the home service server 31, the third operator service server 32, and the local service server 33.

In operation S710, the terminal 100 may be connected to the L-gNB 220 via local access after turning on the local access search function. The terminal 100 may be connected to the L-UPF 320, the L-AMF 420, the L-SMF 520, the L-PCF 620, and the L-UDR/UDM 720 via the L-gNB 220.

In operation S711, the terminal 100, the L-gNB 220, the L-UPF 320, the L-AMF 420, the L-SMF 520, the L-PCF 620, and the L-UDR/UDM 720 may update the policy information (L-Policy) of the terminal 100. For example, for connection to the home service server 31, the third operator service server 32, and the local service server 33, the policy information of the terminal 100 may include an indicator indicating whether to use global access or local access.

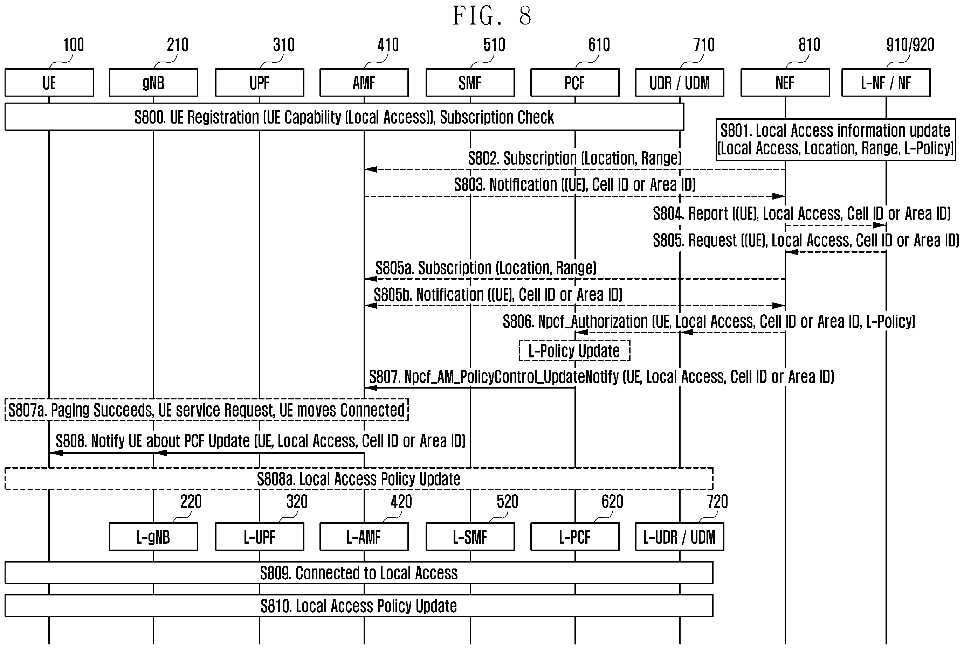

FIG. 8 is a conceptual diagram illustrating a method by which the home network transmits an indicator indicating availability of the local network to the terminal via the AM NAS in the wireless communication system according to the disclosure.

According to the disclosure, the terminal 100 may be quickly connected to local access when using global access. The method according to the disclosure may be used even when a PDU session is not established. When a policy is transmitted to the idle terminal 100, paging may be necessary. Since the terminal 100 performs connection switching to new access and then updates the policy in advance, the terminal 100 may transmit or receive traffic according to an optimal policy after connecting to the new access. After updating of the policy, a traffic transmission/reception path may be changed according to the optimal policy. Since the terminal 100 does not need to update the policy in advance, when connection switching to the access is possible, a delay time may not be generated until access switching. For the method according to the disclosure, an interworking method provided by the home network 100 may be used, so that implementation is possible by modification of the home network 100.

Referring to FIG. 8, via registration of the terminal 100 in operation S800, the gNB 210, the UPF 310, the AMF 410, the SMF 510, the PCF 610, and the UDR/UDM 710 may determine whether the terminal 100 is able to receive a local service via local access, based on capability information and subscriber information of the terminal 100.

In operation S801, the NF 920 of the home network 10 or the L-NF 920 of the local network 20 may update local network information via the NEF 810. When the local network 20 is recognized as an internal network rather than an external network, the NF 920 or the L-NF 920 may perform updating without going through the NEF 810. For example, the local network information may include local access information, location information, and policy information. The local access information may include information on a radio technology and an ID related to the local network 20. The location information may include a range and coordinates related to the local network 20. The policy information may indicate access to connect to the home service 410, the third operator service 42, and the local service 43. For example, the policy information may indicate at least one of global access or local access.

In operation S802, the NEF 810 may transmit a subscription message to the AMF 410. For example, the NEF 810 may generate the subscription message, based on the updated local network information. For example, when at least one terminal is located within the range of the location information (coordinates and range) related to the local network 20, the subscription message may include an indicator for requesting to notify that the at least one terminal is located within the range of the location information. The AMF 410 may receive the subscription message from the NEF 810.

In operation S803, the AMF 410 may transmit a notification message to the NEF 810. The AMF 410 may generate the notification message, based on the subscription message. For example, the notification message may include a cell ID or area ID and terminal information on the at least one terminal located within the range of the location information (coordinates and range) related to the local network 20. For example, the terminal 100 may be located within the range of the location information (coordinates and range) related to the local network 20.

In operation S804, the NEF 810 of the home network 10 may transmit a report message to the L-NF 920 of the local network 20. For example, the NEF 810 may generate the report message, based on the notification message. For example, the report message may include information indicating that the terminal 100 is located within the range of the location information (coordinates and range) related to the local network 20. For example, the report message may include the range, location, local access information, and an ID of the terminal 100. The L-NF 920 may receive the report message from the NEF 810.

In operation S805, the L-NF 920 of the local network 20 may transmit a request message to the NEF 810 of the home network 10. For example, the L-NF 920 may generate the request message, based on the report message. For example, the request message may include an indicator for requesting policy update and transmission of a local access indicator for the terminal 100. For example, the request message may include the range, location, local access, and the ID of the terminal 100.

In operation S805a, the NEF 810 may transmit a subscription message to the AMF 410. For example, the NEF 810 may generate the subscription message, based on the request message. When the terminal 100 is located within the range of the location information (coordinates and range) related to local access, the subscription message may include an indicator for requesting to notify that the terminal 100 is located within the range of the location information. The AMF 410 may receive the subscription message from the NEF 810.

In operation S805b, the AMF 410 may transmit a notification message to the NEF 810. For example, the AMF 410 may generate the notification message, based on the subscription message. For example, the notification message may include a cell ID or area ID and terminal information related to the terminal 100.

In operation S806, the NEF 810 may transmit an Npcf authorization message to the PCF 610 via the UDR/UDM 710. The NEF 810 may generate the Npcf authorization message, based on the notification message. For example, the Npcf authorization message may include an indicator for requesting to update the policy for the terminal 100. For example, the Npcf authorization message may include policy information (L-Policy) indicating an access path for connection to the home service server 31, the third operator service server 32, and the local service server 33, the location information including the cell ID or area ID, the local access information, and the terminal information related to the terminal 100. The NEF 810 may transmit the Npcf authorization message to the UDR/UDM 710. The UDR/UDM 710 may receive the Npcf authorization message from the NEF 810. The UDR/UDM 710 may transmit the Npcf authorization message to the PCF 610. The PCF 610 may receive the Npcf authorization message from the NEF 810. The PCF 610 may update a policy for local access, based on the Npcf authorization message.

In operation S807, the PCF 710 may transmit a policy update request message to the AMF 410. The PCF 710 may generate the policy update request message, based on the updated policy for local access. For example, the policy update request message may include the cell ID or area ID, the local access information, and the terminal information related to the terminal 100. For the idle terminal 100, paging may be performed in operation S807a.

In operation S808, the policy update request message may be transmitted from the AMF 410 to the terminal 100 via the gNB 210. For example, the AMF 410 may transmit the policy update request message to the gNB 210. The gNB 210 may receive the policy update request message from the AMF 410. The gNB 210 may transmit the policy update request message to the terminal 100. The terminal 100 may receive the policy update request message from the gNB 210. For example, the policy update request message may include the cell ID or area ID, the local access information, and the terminal information related to the terminal 100. The terminal 100 may turn on a search function for local access, based on the policy update request message.

In operation S808a, the terminal 100, the L-gNB 220, the L-UPF 320, the L-AMF 420, the L-SMF 520, the L-PCF 620, and the L-UDR/UDM 720 may update the policy information (L-Policy) of the terminal 100. For example, the policy information may include an indicator indicating an access path for connection to the home service server 31, the third operator service server 32, and the local service server 33.

In operation S809, the terminal 100 may turn on the search function for local access, and then may be connected to the L-gNB 220 via local access. The terminal 100 may be connected to the L-UPF 320, the L-AMF 420, the L-SMF 520, the L-PCF 620, and the L-UDR/UDM 720 via the L-gNB 220.

In operation S810, the terminal 100, the L-gNB 220, the L-UPF 320, the L-AMF 420, the L-SMF 520, the L-PCF 620, and the L-UDR/UDM 720 may update the policy information (L-Policy) of the terminal 100. For example, for connection to the home service server 31, the third operator service server 32, and the local service server 33, the policy information of the terminal 100 may include an indicator indicating whether to use global access or local access.

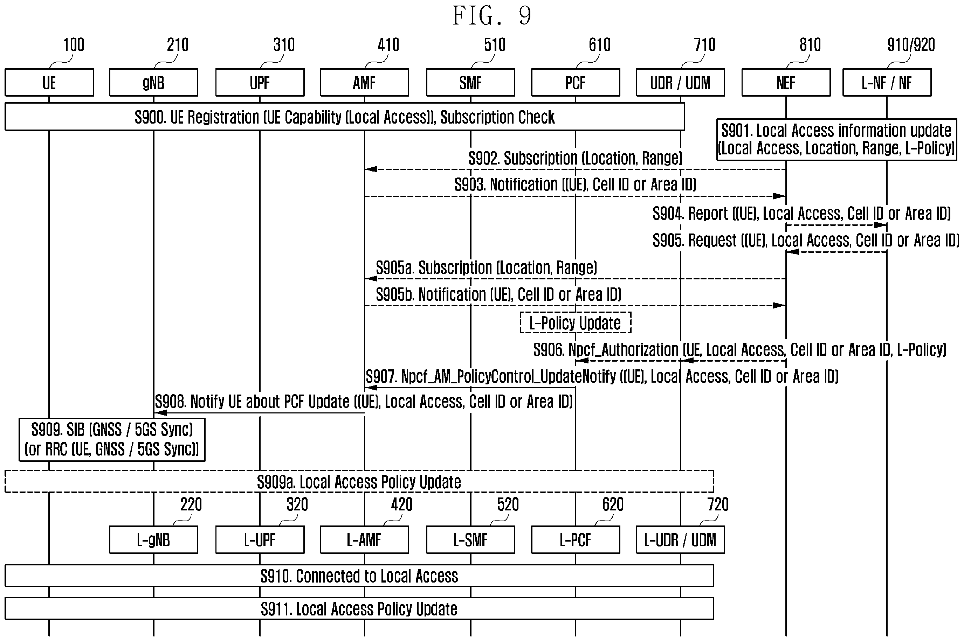

FIG. 9 is a flowchart illustrating a method by which the home network 10 transmits (SIB, RRC Signaling) an indicator indicating availability of the local network 20 to the terminal 100 via AS in the wireless communication system according to the disclosure.

According to the disclosure, the terminal 100 may be quickly connected to local access when using global access. When a policy is broadcast via SIB, paging may be omitted also for a case where the policy is transmitted to the idle terminal 100. Since the terminal 100 performs connection switching to new access and then updates the policy in advance, the terminal 100 may transmit or receive traffic according to an optimal policy after connecting to the new access. After updating of the policy, a traffic transmission/reception path may be changed according to the optimal policy. Since the terminal 100 does not need to update the policy in advance, when connection switching to the access is possible, a delay time may not be generated until access switching. For the method according to the disclosure, an interworking method provided by the home network 10 may be used, so that implementation is possible by modification of the home network 10.

Referring to FIG. 9, via registration of the terminal 100 in operation S900, the gNB 210, the UPF 310, the AMF 410, the SMF 510, the PCF 610, and the UDR/UDM 710 may determine whether the terminal 100 is able to use a local service using local access, based on capability information and subscriber information of the terminal 100.

In operation S901, the NF 910 of the home network 10 or the L-NF 920 of the local network 20 may update local network information via the NEF 810. When the local network 20 is recognized as an internal network rather than an external network, the NF 910 or the L-NF 920 may perform updating without going through the NEF 810. For example, the local network information may include local access information, location information, and policy information. The local access information may include information on a radio technology and an ID related to the local network 20. The location information may include a range and coordinates related to the local network 20. The policy information may indicate access to connect to the home service 410, the third operator service 42, and the local service 43. For example, the policy information may indicate at least one of global access or local access.

In operation S902, the NEF 810 may transmit a subscription message to the AMF 410. For example, the NEF 810 may generate the subscription message, based on the updated local network information. For example, when at least one terminal is located within the range of the relevant location information (coordinates and range) related to the local network 20, the subscription message may include an indicator for requesting to notify that the at least one terminal is located within the range of the location information. The AMF 410 may receive the subscription message from the NEF 810. For example, the terminal 100 may be located within the range of the location information (coordinates and range) related to the local network 20.

In operation S903, the AMF 410 may transmit a notification message to the NEF 810. The AMF 410 may generate the notification message, based on the subscription message. For example, the notification message may include a cell ID or area ID and terminal information on the terminal 100.

In operation S904, the NEF 810 of the home network 10 may transmit a report message to the L-NF 920 of the local network 20. The NEF 810 may generate the report message, based on the notification message. For example, the report message may include information indicating that the terminal 100 is located within the range of the relevant location information (coordinates and range) related to the local network 20. For example, the report message may include information relating to the range, location, local access information, and an ID of the terminal 100. The L-NF 920 may receive the report message from the NEF 810.

In operation S905, the L-NF 920 of the local network 20 may transmit a request message to the NEF 910 of the home network 10. The L-NF 920 may generate the request message, based on the report message. For example, the request message may include information for requesting policy update and transmission of a local access indicator for the terminal 100. For example, the request message may include information relating to the range, location, local access information, and the ID of the terminal 100. The NEF 910 may receive the request message from the L-NF 920.

In operation S905a, the NEF 810 may transmit a subscription message to the AMF 410. The NEF 810 may generate the subscription message, based on the request message. For example, when at least one terminal is located within the range of the location information (coordinates and range) related to the local network 20, the subscription message may include an indicator for requesting to notify that the at least one terminal is located within the range of the location information. The AMF 410 may receive the subscription message from the NEF 810.

In operation S905b, the AMF 410 may transmit a notification message to the NEF 810. The AMF 410 may generate the notification message, based on the subscription message. For example, the notification message may include a cell ID or area ID and terminal information on the terminal located within the range of the location information (coordinates and range) related to local access. The NEF 810 may receive the notification message from the AMF 410. For example, the terminal 100 may be located within the range of the location information (coordinates and range) related to the local network 20.

In operation S906, the NEF 810 may transmit an Npcf authorization message to the PCF 610 via the UDR/UDM 710. The NEF 810 may generate the Npcf authorization message, based on the notification message. For example, the Npcf authorization message may include information for requesting to update the policy for the terminal 100. For example, the Npcf authorization message may include policy information (L-Policy) indicating an access path for connection to the home service server 31, the third operator service server 32, and the local service server 33, the location information including the cell ID or area ID, the local access information, and the terminal information related to the terminal 100. The NEF 810 may transmit the Npcf authorization message to the UDR/UDM 710. The UDR/UDM 710 may receive the Npcf authorization message from the NEF 810. The UDR/UDM 710 may transmit the Npcf authorization message to the PCF 610. The PCF 610 may receive the Npcf authorization message from the NEF 810. The PCF 610 may update a policy for local access, based on the Npcf authorization message.

In operation S907, the PCF 610 may transmit a policy update request message (Npcf_AM_PolicyCOntrol_UpdateNotify) to the AMF 410. The AMF 410 may receive the policy update request message from the PCF 610. The PCF 610 may generate the policy update request message, based on the updated policy for local access. For example, the policy update request message may include the cell ID or area ID, the local access information, and the terminal information related to the terminal 100. For the idle terminal 100, paging may be performed as shown in operation S807a of FIG. 8.

In operation S908, the AMF 410 may transmit a context update message of the terminal 100 to the gNB 210. The gNB 210 may receive the context update message of the terminal 100 from the AMF 410. The AMF 410 may generate the context update message, based on the policy update request message. For example, the context update message may include the cell ID or area ID, the local access information, and the terminal information related to the terminal 100.

In operation S909, the gNB 210 may transmit an indicator indicating to use local access to the terminal 100 via system information broadcast (SIB) or radio resource control (RRC). For example, the gNB 210 may generate an SI or RRC message, based on the context update message. For example, the SI or RRC message may include an indicator indicating to use local access. For example, the SI or RRC message may include the cell ID or area ID. For example, the gNB 210 may transmit the SI or RRC message to the terminal 100. The terminal 100 may receive the SI or RRC message from the gNB 210.

In operation S909a, the terminal 100, the L-gNB 220, the L-UPF 320, the L-AMF 420, the L-SMF 520, the L-PCF 620, and the L-UDR/UDM 720 may update the policy information (L-Policy) of the terminal 100.

In operation S910, the terminal 100 may turn on a search function for local access, and then may be connected to the L-gNB 220 via local access. The terminal 100 may be connected to the L-UPF 320, the L-AMF 420, the L-SMF 520, the L-PCF 620, and the L-UDR/UDM 720 via the L-gNB 220. In operation S911, the terminal 100, the L-gNB 220, the L-UPF 320, the L-AMF 420, the L-SMF 520, the L-PCF 620, and the L-UDR/UDM 720 may update the policy information (L-Policy) of the terminal 100. For example, for connection to the home service server 31, the third operator service server 32, and the local service server 33, the policy information of the terminal 100 may include an indicator indicating whether to use global access or local access.

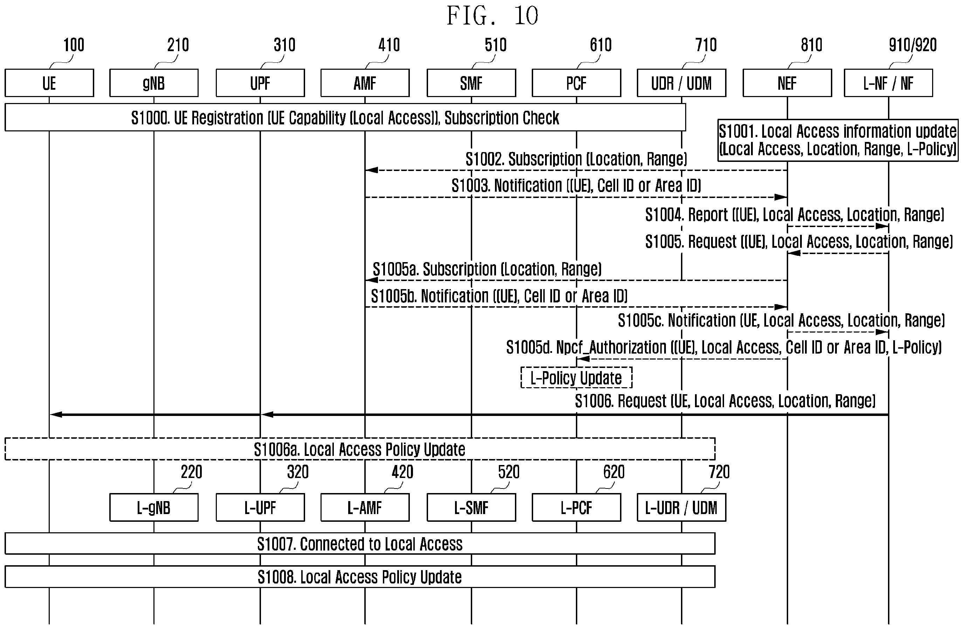

FIG. 10 is a flowchart illustrating a method by which the home network 10 transmits an indicator indicating availability of the local network 20 to the terminal 100 via UP in the wireless communication system according to the disclosure.

According to the disclosure, the terminal 100 may be quickly connected to local access when using global access. For the method according to the disclosure, general user traffic is used rather than signaling traffic, so that implementation may be performed without changing a communication network. Since the terminal 100 performs connection switching to new access and then updates a policy in advance, the terminal 100 may transfer traffic according to an optimal policy after connecting to the new access. After updating of the policy, a traffic transmission/reception path may be changed according to the optimal policy. Since the terminal 100 does not need to update the policy in advance, when connection switching to the access is possible, a delay time may not be generated until access switching. For the method according to the disclosure, an interworking method provided by the home network 10 may be used, so that implementation is possible by modification of the home network 10.

Via registration of the terminal 100 in operation S1000, the gNB 210, the UPF 310, the AMF 410, the SMF 510, the PCF 610, and the UDR/UDM 710 may determine whether the terminal 100 is able to use a local service using local access, based on capability information and subscriber information of the terminal 100.

In operation S 1001, the NF 910 of the home network 10 or the L-NF 920 of the local network 20 may update local network information via the NEF 810. When the local network 20 is recognized as an internal network rather than an external network, the NF 910 or the L-NF 920 may perform updating without going through the NEF 810. For example, the local network information may include local access information, location information, and policy information. The local access information may include information on a radio technology and an ID related to the local network 20. The location information may include a range and coordinates related to the local network 20. The policy information may indicate access to connect to the home service 410, the third operator service 42, and the local service 43. For example, the policy information may indicate at least one of global access or local access.

In operation S1002, the NEF 810 may transmit a first subscription message to the AMF 410. For example, the NEF 810 may generate the first subscription message, based on the updated local network information. For example, when at least one terminal is located within the range of the relevant location information (coordinates and range) related to the local network 20, the first subscription message may include an indicator for requesting to notify that the at least one terminal is located within the range of the location information. The AMF 410 may receive the first subscription message from the NEF 810. For example, the terminal 100 may be located within the range of the relevant location information (coordinates and range) related to local access.

In operation S1003, the AMF 410 may transmit a first notification message to the NEF 810. The AMF 410 may generate the first notification message, based on the first subscription message. For example, the first notification message may include a cell ID or area ID and terminal information on the terminal 100.

In operation S1004, the NEF 810 of the home network 10 may transmit a report message to the L-NF 920 of the local network 20. The NEF 810 may generate the report message, based on the first notification message. For example, the report message may include information indicating that the terminal 100 is located within the range of the relevant location information (coordinates and range) related to the local network 20. For example, the report message may include information relating to the range, location, local access information, and an ID of the terminal 100. The L-NF 920 may receive the report message from the NEF 810.

In operation S1005, the L-NF 920 of the local network 20 may transmit a first request message to the NEF 910 of the home network 10. The L-NF 920 may generate the first request message, based on the report message. For example, the first request message may include information for requesting policy update and transmission of a local access indicator for the terminal 100. For example, the first request message may include information relating to the range, location, local access, and the ID of the terminal 100. The NEF 910 may receive the first request message from the L-NF 920.

In operation S1005a, the NEF 810 may transmit a second subscription message to the AMF 410. The NEF 810 may generate the second subscription message, based on the first request message. For example, when at least one terminal is located within the range of the location information (coordinates and range) related to local access, the second subscription message may include an indicator for requesting to notify that the at least one terminal is located within the range of the location information. The AMF 410 may receive the second subscription message from the NEF 810.

In operation S1005b, the AMF 410 may transmit a second notification message to the NEF 810. The AMF 410 may generate the second notification message, based on the second subscription message. For example, the second notification message may include a cell ID or area ID and terminal information on the at least one terminal located within the range of the location information (coordinates and range) related to the local network 20. The NEF 810 may receive the second notification message from the AMF 410. For example, the terminal 100 may be located within the range of the location information (coordinates and range) related to the local network 20.

In operation S1005c, the NEF 810 of the home network 10 may transmit a third notification message to the L-NF 920 of the local network 20. The NEF 810 may generate the third notification message, based on the second notification message. For example, the third notification message may include information indicating that the terminal 100 is located within the range of the location information (coordinates and range) related to the local network 20. For example, the third notification message may include information relating to the range, location, local access information, and the ID of the terminal 100.

In operation S1005d, the NEF 810 may transmit an Npcf authorization message to the PCF 610. The NEF 810 may receive the Npcf authorization message from the PCF 610. The NEF 810 may generate the Npcf authorization message, based on the second notification message. The Npcf authorization message may include information for requesting to update the policy for the terminal 100. For example, the Npcf authorization message may include policy information (L-Policy) indicating an access path for connection to the home service server 31, the third operator service server 32, and the local service server 33, the location information including the cell ID or area ID, the local access information, and the terminal information related to the terminal 100. The PCF 610 may update a policy for local access, based on the Npcf authorization message.

In operation S1006, the L-NF 920 may transmit a second request message to the UPF 310. For example, the L-NF 920 may generate the second request message, based on the third notification message. The UPF 310 may receive the second request message from the L-NF 920. The UPF 310 may transmit the second request message to the terminal 100. The terminal 100 may receive the second request message from the UPF 310. For example, the second request message may include information indicating to use local access. For example, the second request message may include the cell ID or area ID.

In operation S1006a, the terminal 100, the L-gNB 220, the L-UPF 320, the L-AMF 420, the L-SMF 520, the L-PCF 620, and the L-UDR/UDM 720 may update the policy information (L-Policy) of the terminal 100.

In operation S1007, the terminal 100 may be connected to the L-gNB 220 via local access after turning on a local access search function. The terminal 100 may be connected to the L-UPF 320, the L-AMF 420, the L-SMF 520, the L-PCF 620, and the L-UDR/UDM 720 via the L-gNB 220.

In operation S1008, the terminal 100, the L-gNB 220, the L-UPF 320, the L-AMF 420, the L-SMF 520, the L-PCF 620, and the L-UDR/UDM 720 may update the policy information (L-Policy) of the terminal 100. For example, for connection to the home service server 31, the third operator service server 32, and the local service server 33, the policy information of the terminal 100 may include an indicator indicating whether to use global access or local access.

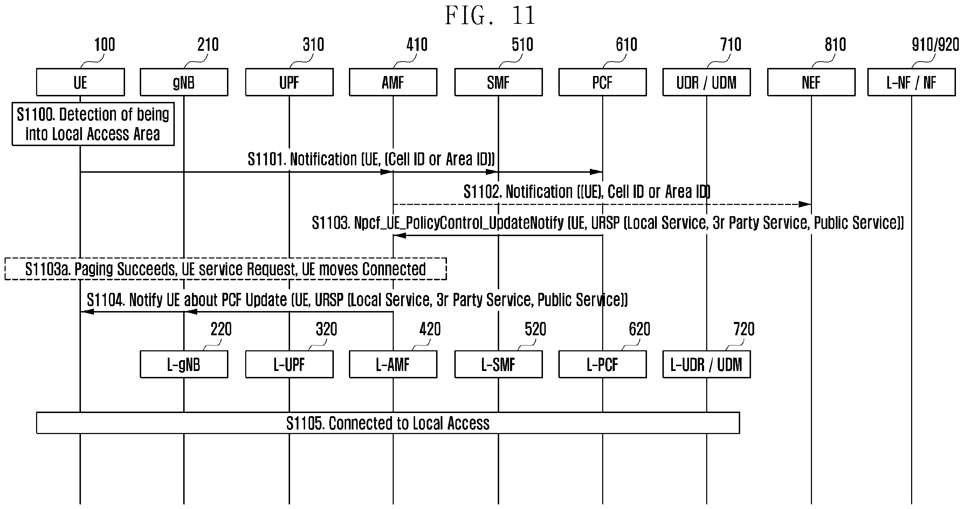

FIG. 11 is a flowchart illustrating a method of, when the terminal 100 enters a specific area, performing connection switching to local access after updating a policy in the wireless communication system according to the disclosure.

According to the disclosure, since the terminal 100 updates a policy for new access in advance and then is connected to the new access, the terminal 100 may, after connection to the new access, quickly transmit or receive traffic according to an optimal policy without delay. The terminal 100 may update the policy in advance and then perform connection switching to the access.

In operation S1100, the terminal 100 may detect entering of a specific area.

In operation S1101, the terminal 100 may transmit a notification message to the PCF 610 via the AMF 410. For example, the terminal 100 may generate the notification message when entering the specific area. For example, the notification message may include information indicating that the terminal 100 has entered the specific area. For example, the notification message may include an ID of the terminal 100 and a cell ID or area ID. The terminal 100 may transmit the notification message to the AMF 410. The AMF 410 may receive the notification message from the terminal 100.

The AMF 410 may transmit the notification message to the PCF 610. The PCF 610 may receive the notification message from the AMF 410. Alternatively, the AMF 410 may transmit the notification message to the PCF 610 via the SMF 510. For example, the AMF 410 may transmit the notification message to the SMF 510. The SMF 510 may receive the notification message from the AMF 410. The SMF 510 may transmit the notification message to the PCF 610. The PCF 610 may receive the notification message from the SMF 510.

In operation S1102, the AMF 410 may transmit the notification message to the NEF 810. The NEF 810 may receive the notification message from the AMF 410. The notification message may include the ID of the terminal 100 and the cell ID or area ID.

In operation S1103, the PCF 610 may transmit a policy update request message (Npcf_UE_PolicyContro_UpdateNotify) to the AMF 410. The AMF 410 may receive the policy update request message from the PCF 610. For example, the PCF 610 may generate the policy update request message, based on the notification message. The policy update request message may include information for requesting to update a policy for the terminal 100. For example, the policy update request message may include policy information (L-Policy) indicating an access path for connection to the home service server 31, the third operator service server 32, and the local service server 33, location information including the cell ID or area ID, local access information, and terminal information related to the terminal 100. For example, the policy information may be a UE routing selection policy (URSP).

For the idle terminal 100, in operation S1103a, paging for the terminal 100 may be performed.

In operation S1104, the AMF 410 may transmit the policy update request message to the terminal 100 via the gNB 210. For example, the AMF 410 may transmit the policy update request message to the gNB 210. The gNB 210 may receive the policy update request message from the AMF 410. The gNB 210 may transmit the policy update request message from the terminal 100. The terminal 100 may receive the policy update request message from the gNB 210. For example, the policy update request message may include the policy information (L-Policy) indicating the access path for connection to the home service server 31, the third operator service server 32, and the local service server 33, the location information including the cell ID or area ID, the local access information, and the terminal information related to the terminal 100. For example, the policy information may be a UE routing selection policy (URSP).

In operation S1105, the terminal 100 may access the local network 20. For example, the terminal may connect to the L-gNB 220, based on the policy update request message. The terminal 100 may be connected to the L-UPF 320, the L-AMF 420, the L-SMF 520, the L-PCF 620, and the L-UDR/UDM 720 via the L-gNB 220.

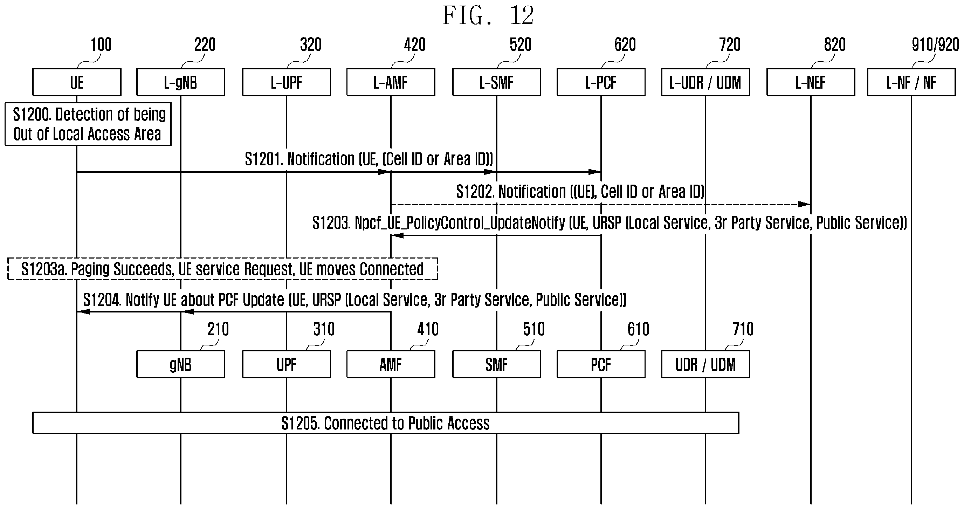

FIG. 12 is a flowchart illustrating a method of, when the terminal 100 leaves a specific area, performing connection switching to general access after updating a policy in the wireless communication system according to the disclosure.

According to the disclosure, since the terminal 100 updates a policy for new access in advance and then is connected to the access, the terminal 100 may, after connection to the new access, quickly transmit or receive traffic according to an optimal policy without delay. The terminal 100 may update the policy in advance and then perform connection switching to the access.

In operation S1200, the terminal 100 may detect leaving from a specific area. For example, the specific area may correspond to coverage of the local network 20.

In operation S1201, the terminal 100 may transmit a notification message to the L-PCF 620 of the local network 20. When detecting that the terminal 100 has left the specific area, the terminal 100 may transmit the notification message to the L-PCF 620. For example, the notification message may be transmitted from the terminal 100 to the L-PCF 620 via at least one of the L-AMF 420 and the L-SMF 520. For example, the terminal 100 may transmit the notification message to the L-AMF 420. The L-AMF 420 may receive the notification message from the terminal 100. The notification message may include a cell ID or area ID and a terminal ID of the terminal 100. The L-PCF 620 may receive the notification message from the terminal 100.

In operation S1202, the L-AMF 420 may transmit the notification message to the L-NEF 820 of the local network 20. The L-NEF 820 may receive the notification message from the L-AMF 420. For example, the notification message may include the cell ID or area ID and the terminal ID of the terminal 100.

In operation S1203, the L-PCF 620 of the local network 20 may transmit a policy update request message (Npcf_UE_PolicyControl_updatenotify) to the L-AMF 420. The L-PCF 620 may generate the policy update request message, based on the notification message. For example, the policy update request message may include an indicator for requesting the terminal 100 to update the policy. For example, the policy update request message may include policy information (L-Policy) indicating an access path for connection to the home service server 31, the third operator service server 32, and the local service server 33, location information including the cell ID or area ID, local access information, and terminal information related to the terminal 100. For example, the policy information may be UE routing selection policy (URSP) information.

For the idle terminal 100, in operation S1203a, paging for the terminal 100 may be performed.

In operation S 1204, the L-AMF 420 may transmit the policy update request message to the terminal 100 via the L-gNB 220. For example, the L-AMF 420 may transmit the policy update request message to the L-gNB 220. The L-gNB 220 may receive the policy update request message from the L-AMF 410. The L-gNB 220 may transmit the policy update request message to the terminal 100. The terminal 100 may receive the policy update request message from the L-gNB 210. For example, the policy update request message may include the policy information (L-Policy) indicating the access path for connection to the home service server 31, the third operator service server 32, and the local service server 33, the location information including the cell ID or area ID, the local access information, and the terminal information related to the terminal 100. For example, the policy information may be UE routing selection policy (URSP) information.

In operation S1205, the terminal 100 may access a general network. For example, the general network may be the home network 10. The terminal 100 may connect to the gNB 210, based on the policy update request message. The terminal 100 may be connected to the UPF 310, the AMF 410, the SMF 510, the PCF 610, and the UDR/UDM 710 via the gNB 210.

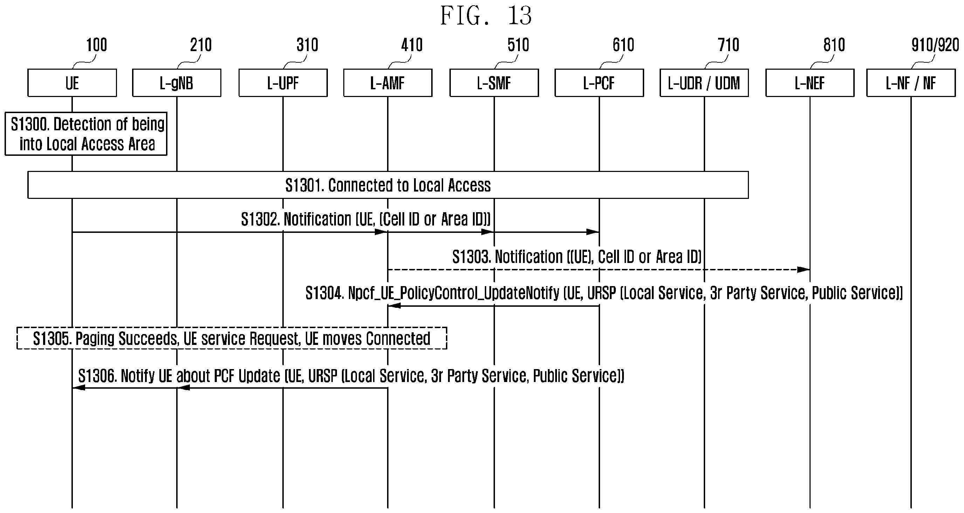

FIG. 13 is a flowchart illustrating a method of, when the terminal 100 enters a specific area, performing connection switching to local access and then updating a policy in the wireless communication system according to the disclosure.

According to the disclosure, since the terminal 100 performs connection switching to new access and then updates a policy in advance, the terminal 100 may transmit or receive traffic according to an optimal policy after connecting to the new access. After updating of the policy, a traffic transmission/reception path may be changed according to the optimal policy. Since the terminal 100 does not need to update the policy in advance, when connection switching to the access is possible, a delay time may not be generated until access switching.

In operation S1300, the terminal 100 may detect entering of a specific area. For example, the specific area may correspond to coverage of the local network 20.

In operation S1301, after entering the specific area, the terminal 100 may be connected to the local network 20 having coverage of the specific area. For example, the terminal 100 may be connected to the L-gNB 220 having the coverage of the specific area. The terminal 100 may be connected to the L-UPF 320, the L-AMF 420, the L-SMF 520, the L-PCF 620, and the L-UDR/UDM 720 via the L-gNB 220.

In operation S1302, the terminal 100 may transmit a notification message to the L-PCF 620. The notification message may be transmitted from the terminal 100 to the L-PCF 620 via the L-AMF 420. For example, the terminal 100 may transmit the notification message to the L-AMF 420. The L-AMF 420 may receive the notification message from the terminal 100. The L-AMF 420 may transmit the notification message to the L-PCF 620. The L-PCF 620 may receive the notification message from the L-AMF 420. Alternatively, the notification message may be transmitted from the terminal 100 to the L-PCF 620 via the L-AMF 420 and the L-SMF 520. The notification message may include an ID of the terminal 100 and a cell ID or area ID. The L-PCF 620 may receive the notification message from the terminal 100.

In operation S1303, the L-AMF 420 may transmit the notification message to the L-NEF 820. The L-NEF 820 may receive the notification message from the L-AMF 420. The notification message may include the ID of the terminal 100 and the cell ID or area ID.

In operation S1304, the L-PCF 620 may transmit a policy update request message (Npcf_UE_PolicyControl_updatenotify) to the L-AMF 420. The L-AMF 420 may receive the policy update request message from the L-PCF 620. The L-PCF 620 may generate the policy update request message, based on the notification message. The policy update request message may include an indicator for requesting the terminal 100 to update the policy. For example, the policy update request message may include policy information (L-Policy) indicating an access path for connection to the home service server 31, the third operator service server 32, and the local service server 33, location information including the cell ID or area ID, local access information, and terminal information related to the terminal 100. For example, the policy information may be a UE routing selection policy (URSP).

For the idle terminal 100, in operation S1305, paging for the terminal 100 may be performed.

In operation S1306, the L-AMF 420 may transmit the policy update request message to the terminal 100 via the L-gNB 220. For example, the L-AMF 420 may transmit the policy update request message to the L-gNB 220. The L-gNB 220 may receive the policy update request message from the L-AMF 410. The L-gNB 220 may transmit the policy update request message to the terminal 100. The terminal 100 may receive the policy update request message from the L-gNB 210. For example, the policy update request message may include the policy information (L-Policy) indicating the access path for connection to the home service server 31, the third operator service server 32, and the local service server 33, the location information including the cell ID or area ID, the local access information, and the terminal information related to the terminal 100. For example, the policy information may be a UE routing selection policy (URSP).

The terminal 100 may selectively update a PDU session. For example, the terminal 100 may update the PDU session, based on the policy update request message.

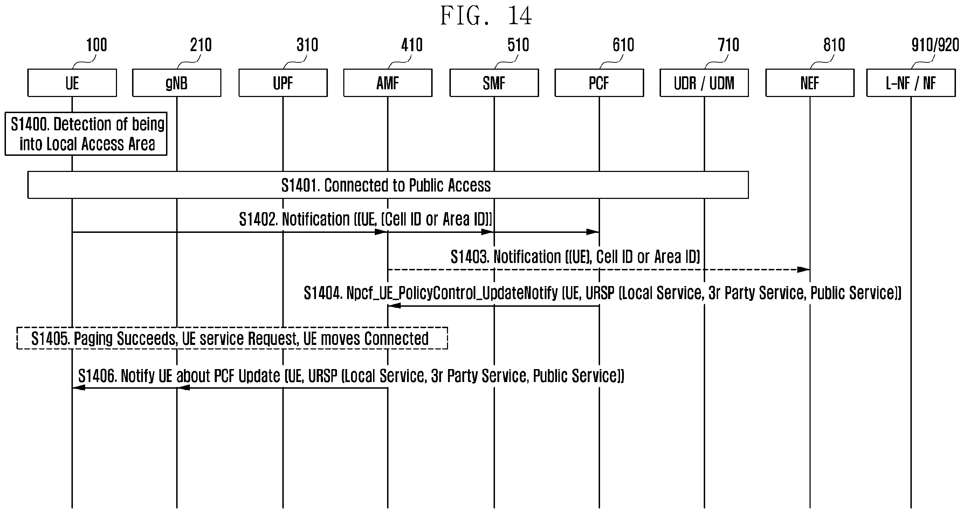

FIG. 14 is a flowchart illustrating a method of, when the terminal 100 leaves a specific area, performing connection switching to general access and then updating a policy in the wireless communication system according to the disclosure.

According to the disclosure, since the terminal 100 performs connection switching to new access and then updates a policy in advance, the terminal 100 may transmit or receive traffic according to an optimal policy after connecting to the new access. After updating of the policy, a traffic transmission/reception path may be changed according to the optimal policy. Since the terminal 100 does not need to update the policy in advance, when connection switching to the access is possible, a delay time may not be generated until access switching.

In operation S1400, the terminal 100 may detect leaving from a specific area. For example, the specific area may correspond to coverage of the local network 20.

In operation S1401, the terminal 100 may access a general network via general access. The general network may be the home network 10. For example, after detecting that the terminal 100 has left the specific area, the terminal 100 may be connected to the gNB 210. The terminal 100 may be connected to the UPF 310, the AMF 410, the SMF 510, the PCF 610, and the UDR/UDM 710 via the gNB 210.

In operation S1402, the terminal 100 may transmit a notification message to the PCF 610. For example, the notification message may be transmitted from the terminal 100 to the PCF 610 via the AMF 410. For example, the terminal 100 may transmit the notification message to the AMF 410. The AMF 410 may receive the notification message from the terminal 100. Alternatively, the notification message may be transmitted from the terminal 100 to the PCF 610 via the AMF 410 and the SMF 510. The notification message may include an ID of the terminal 100 and a cell ID or area ID.

In operation S1403, the AMF 410 may transmit the notification message to the NEF 810. The NEF 810 may receive the notification message from the AMF 410. The notification message may include the ID of the terminal 100 and the cell ID or area ID.

In operation S1404, the PCF 610 may transmit a policy update request message (Npcf_UE_PolicyControl_updatenotify) to the AMF 410. The AMF 410 may receive the policy update request message from the PCF 610. The PCF 610 may generate the policy update request message, based on the notification message. The policy update request message may include an indicator for requesting the terminal 100 to update the policy. For example, the policy update request message may include policy information (L-Policy) indicating an access path for connection to the home service server 31, the third operator service server 32, and the local service server 33, location information including the cell ID or area ID, local access information, and terminal information related to the terminal 100. For example, the policy information may be a UE routing selection policy (URSP).

For the idle terminal 100, in operation S1505, paging for the terminal 100 may be performed.

In operation S1506, the AMF 410 may transmit the policy update request message to the terminal 100 via the gNB 210. For example, the AMF 410 may transmit the policy update request message to the gNB 210. The gNB 210 may receive the policy update request message from the AMF 410. The gNB 210 may transmit the policy update request message to the terminal 100. The terminal 100 may receive the policy update request message from the gNB 210. For example, the policy update request message may include the policy information (L-Policy) indicating the access path for connection to the home service server 31, the third operator service server 32, and the local service server 33, the location information including the cell ID or area ID, the local access information, and the terminal information related to the terminal 100. For example, the policy information may be UE routing selection policy (URSP) information.

The terminal 100 may selectively update a PDU session. For example, the terminal 100 may update the PDU session, based on the policy update request message.

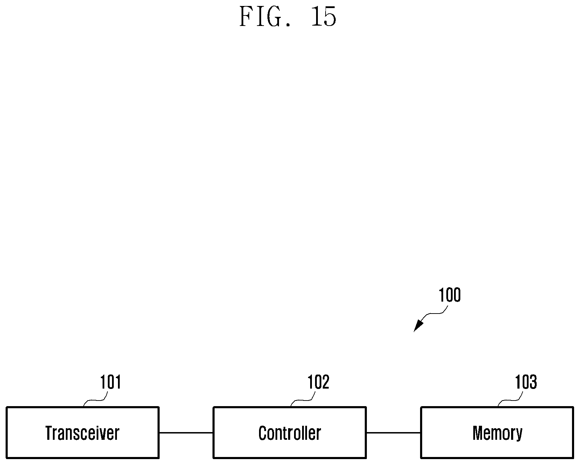

FIG. 15 is a block diagram illustrating the terminal 100 in the wireless communication system according to the disclosure.

Referring to FIG. 15, the terminal 100 may include a transceiver 101, a controller 102, and a memory 103. The terminal 100 may additionally have more elements depending on an implementation scheme. For example, the terminal 100 may further include various additional devices, such as a sensor, an input unit, and a display for a user interface. The disclosure is not limited to such additional elements.

Based on the respective embodiments described in FIG. 1 to FIG. 14, the transceiver 101 may be connected to the gNB 210 or the L-gNB 220 via a wireless channel, and may transmit or receive signals and/or messages to or from various network function devices via the gNB 210 or L-gNB 220. When the terminal 100 communicates with a 5G network, the transceiver 101 may be a device capable of performing transmission to/reception from the 5G communication network. In addition, the transceiver 101 may include a communication processor when necessary.

If the transceiver 101 does not include a communication processor, all signals and/or messages may be processed by the controller.

The controller 102 may control basic operations of the terminal, and may control reception and storage of the information and messages described in FIG. 1 to FIG. 14. For example, the controller 102 may perform operations based on the descriptions in FIG. 1 to FIG. 14.

The memory 103 may store various data required for controlling of the terminal 100, and may have an area for storing various information and messages described in FIG. 1 to FIG. 14.

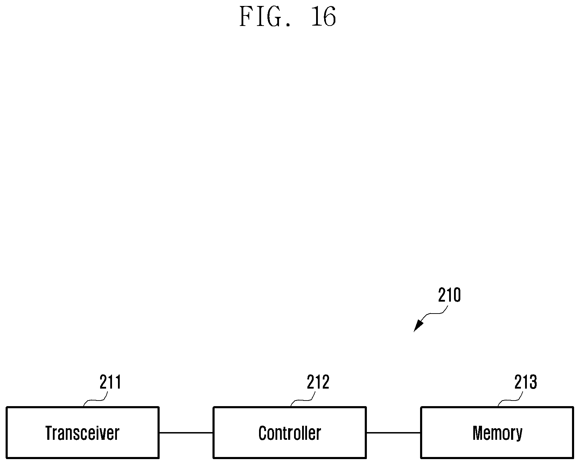

FIG. 16 is a block diagram illustrating the gNB 210 of the first network 10 in the wireless communication system according to the disclosure.

Referring to FIG. 16, the gNB 210 may include a transceiver 211, a controller 212, and a memory 213. The gNB 210 may additionally have more elements depending on an implementation scheme. For example, the gNB 210 may further include various additional devices, such as a sensor, an input unit, and a display for a user interface. The disclosure is not limited to such additional elements.

Based on the respective embodiments described in FIG. 1 to FIG. 14, the transceiver 212 may be connected to the terminal 100 via a wireless channel, and may transmit or receive signals and/or messages to or from various network function devices. When the gNB 210 communicates with a 5G network, the transceiver 211 may be a device capable of performing transmission to/reception from the 5G communication network. In addition, the transceiver 211 may include a communication processor when necessary.

If the transceiver 211 does not include a communication processor, all signals and/or messages may be processed by the controller 212.

The controller 212 may control basic operations of the gNB 210, and may control reception and storage of the information and messages described in FIG. 1 to FIG. 14. For example, the controller 212 may perform operations based on the descriptions in FIG. 1 to FIG. 14.

The memory 213 may store various data required for controlling of the gNB 210, and may have an area for storing various information and messages described in FIG. 1 to FIG. 14.

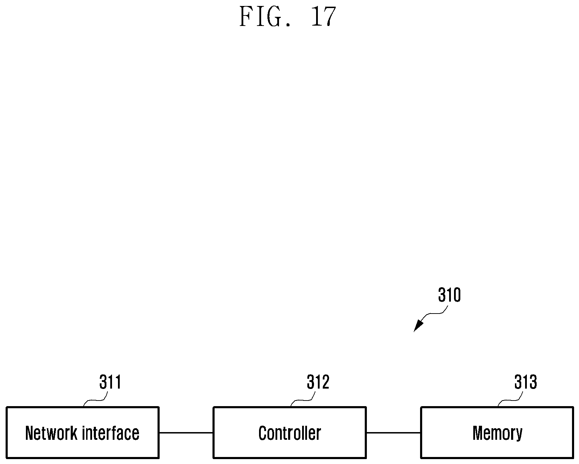

FIG. 17 is a block diagram illustrating the UPF 310 of the first network 10 in the wireless communication system according to the disclosure.

Referring to FIG. 17, the UPF 310 may communicate with another network entity of the core network 11 of the first network 10 via the network interface 311. For example, the UPF 310 may communicate with the UE 100, the gNB 210, the AMF 410, the SMF 510, the PCF 610, the UDR/UDM 710, the NEF 810, the NF 910, and the like.

A controller 312 may be implemented as at least one processor and/or program to perform the operation of the UPF 310. For example, the controller 312 may perform the operation of the UPF 320 described above in FIG. 1 to FIG. 14.

The memory 313 may store programs and various control information required by the controller 312, and may further store the respective pieces of information described in FIG. 1 to FIG. 14.

In addition to the configurations described in FIG. 1 to FIG. 14, the UPF 310 may further include various interfaces for connection to an operator. The disclosure is not particularly limited to such additional elements.

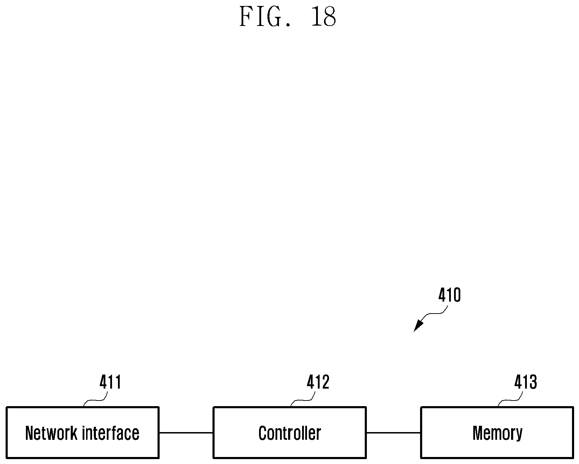

FIG. 18 is a block diagram illustrating the AMF 410 of the first network 10 in the wireless communication system according to the disclosure.

Referring to FIG. 18, the AMF 410 may communicate with another network entity of the core network 11 of the first network 10 via a network interface 411. For example, the AMF 410 may communicate with the UE 100, the gNB 210, the UPF 310, the SMF 510, the PCF 610, the UDR/UDM 710, the NEF 810, the NF 910, and the like.

A controller 412 may be implemented as at least one processor and/or program to perform the operation of the AMF 410. For example, the controller 412 may perform the operation of the AMF 410 described above in FIG. 1 to FIG. 14.

The memory 413 may store programs and various control information required by the controller 412, and may further store the respective pieces of information described in FIG. 1 to FIG. 14.

In addition to the configurations described in FIG. 1 to FIG. 14, the AMF 410 may further include various interfaces for connection to an operator. The disclosure is not particularly limited to such additional elements.

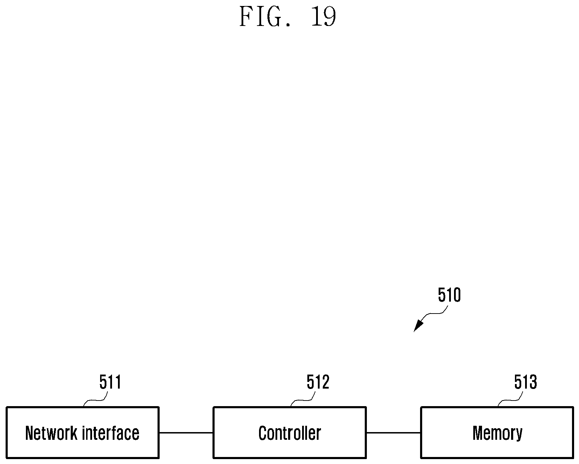

FIG. 19 is a block diagram illustrating the SMF 510 of the first network 10 in the wireless communication system according to the disclosure.

Referring to FIG. 19, the SMF 510 may communicate with another network entity of the core network 11 of the first network 10 via a network interface 511. For example, the SMF 510 may communicate with the UE 100, the gNB 210, the UPF 310, the AMF 410, the PCF 510, the UDR/UDM 710, the NEF 810, the NF 910, and the like.

A controller 512 may be implemented as at least one processor and/or program to perform the operation of the SMF 510. For example, the controller 510 may perform the operation of the SMF 510 described above in FIG. 1 to FIG. 14.

The memory 513 may store programs and various control information required by the controller 512, and may further store the various information and messages described in FIG. 1 to FIG. 14.

In addition to the configurations described above, the SMF 510 may further include various interfaces for connection to an operator. The disclosure is not particularly limited to such additional elements.

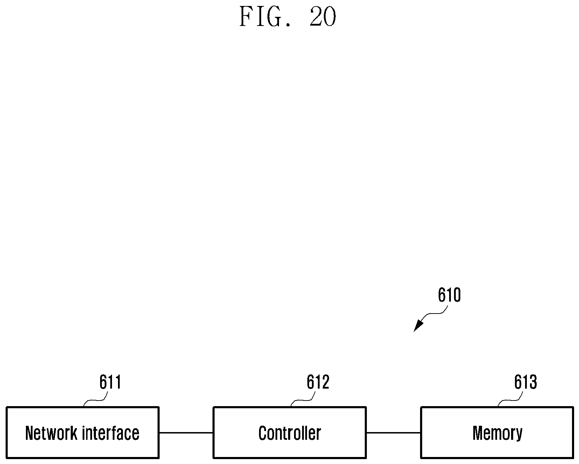

FIG. 20 is a block diagram illustrating the PCF 610 of the first network 10 in the wireless communication system according to the disclosure.

Referring to FIG. 20, the PCF 610 may communicate with another network entity of the core network 11 of the first network 10 via a network interface 611. For example, the PCF 610 may communicate with the UE 100, the gNB 210, the UPF 310, the AMF 410, the SMF 510, the UDR/UDM 710, the NEF 810, the NF 910, and the like.

A controller 612 may be implemented as at least one processor and/or program to perform the operation of the PCF 610. For example, the controller 612 may perform the operation of the PCF 610 described above in FIG. 1 to FIG. 14.

The memory 613 may store programs and various control information required by the controller 612, and may further store the various information and messages described in FIG. 1 to FIG. 14.

In addition to the configurations described above, the PCF 610 may further include various interfaces for connection to an operator. The disclosure is not particularly limited to such additional elements.

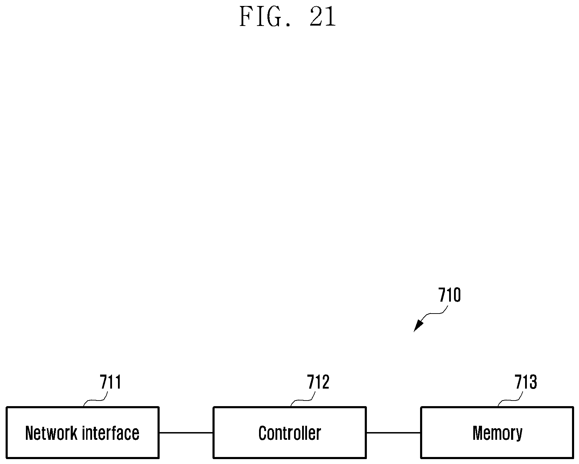

FIG. 21 is a block diagram illustrating the UDR/UDM 710 of the first network 10 in the wireless communication system according to the disclosure.

Referring to FIG. 21, the UDR/UDM 710 may communicate with another network entity of the core network 11 of the first network 10 via a network interface 711. For example, the UDR/UDM 710 may communicate with the UE 100, the gNB 210, the UPF 310, the AMF 410, the SMF 510, the PCF 610, the NEF 810, the NF 910, and the like.

A controller 712 may be implemented as at least one processor and/or program to perform the operation of the UDR/UDM 710. For example, the controller 712 may perform the operation of the UDR/UDM 710 described above in FIG. 1 to FIG. 14.

The memory 713 may store programs and various control information required by the controller 712, and may further store the respective pieces of information described in FIG. 1 to FIG. 14.

In addition to the configurations described above, the UDR/UDM 710 may further include various interfaces for connection to an operator. The disclosure is not particularly limited to such additional elements.

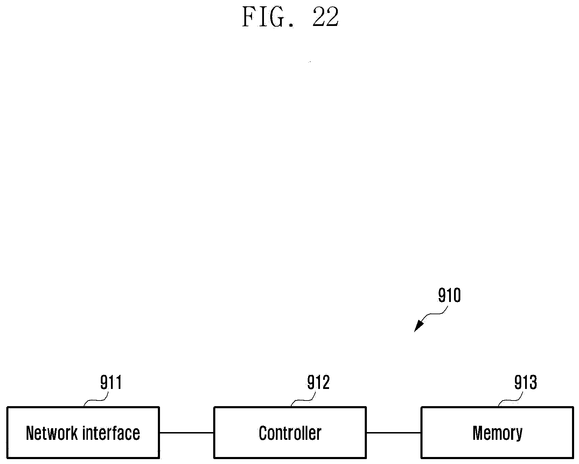

FIG. 22 is a block diagram illustrating the NEF 810 of the first network 10 in the wireless communication system according to the disclosure.

Referring to FIG. 22, the NEF 810 may communicate with another network entity of the core network 11 of the first network 10 via a network interface 811. For example, the NEF 810 may communicate with the UE 100, the gNB 210, the UPF 310, the AMF 410, the SMF 510, the PCF 610, the UDR/UDM 710, the NF 910, and the like.

A controller 812 may be implemented as at least one processor and/or program to perform the operation of the NEF 810. For example, the controller 812 may perform the operation of the NEF 810 described above in FIG. 1 to FIG. 14.

The memory 813 may store programs and various control information required by the controller 812, and may further store the various information and messages described in FIG. 1 to FIG. 14.

In addition to the configurations described above, the NEF 810 may further include various interfaces for connection to an operator. The disclosure is not particularly limited to such additional elements.

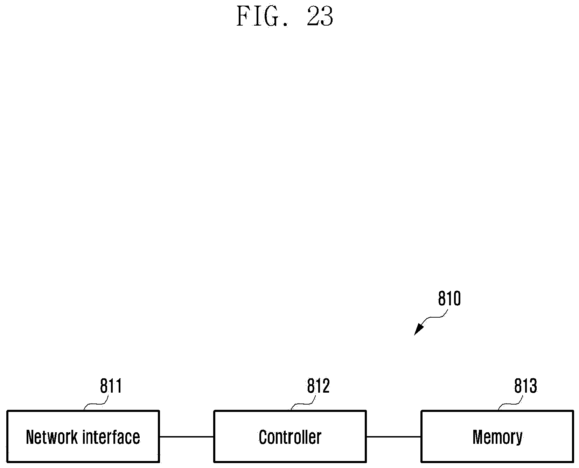

FIG. 23 is a block diagram illustrating the NF 910 of the first network 10 in the wireless communication system according to the disclosure.

Referring to FIG. 23, the NF 910 may communicate with another network entity of the core network 11 of the first network 10 via a network interface 911. For example, the NF 910 may communicate with the UE 100, the gNB 210, the UPF 310, the AMF 410, the SMF 510, the PCF 610, the UDR/UDM 710, the NEF 810, and the like.

A controller 912 may be implemented as at least one processor and/or program to perform the operation of the NF 910. For example, the controller 912 may perform the operation of the NF 910 described above in FIG. 1 to FIG. 14.

The memory 913 may store programs and various control information required by the controller 913, and may further store the various information and messages described in FIG. 1 to FIG. 14.

In addition to the configurations described above, the NF 910 may further include various interfaces for connection to an operator. The disclosure is not particularly limited to such additional elements.

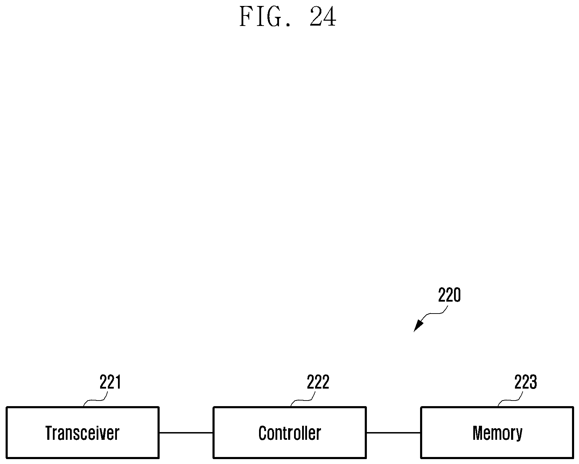

FIG. 24 is a block diagram illustrating the L-gNB 220 of a second network 20 in the wireless communication system according to the disclosure.

Referring to FIG. 24, the L-gNB 220 may include a transceiver 221, a controller 222, and a memory 223. The L-gNB 220 may additionally have more elements depending on an implementation scheme. For example, the L-gNB 220 may further include various additional devices, such as a sensor, an input unit, and a display for a user interface. The disclosure is not limited to such additional elements.

Based on the respective embodiments described in FIG. 1 to FIG. 14, the transceiver 222 may be connected to the terminal 100 via a wireless channel, and may transmit or receive signals and/or messages to or from various network function devices. When the L-gNB 220 communicates with a 5G network, the transceiver 221 may be a device capable of performing transmission to/reception from the 5G communication network. In addition, the transceiver 221 may include a communication processor when necessary.

If the transceiver 221 does not include a communication processor, all signals and/or messages may be processed by the controller 222.

The controller 222 may control basic operations of the L-gNB 220, and may control reception and storage of the information and messages described in FIG. 1 to FIG. 14. For example, the controller 222 may perform operations based on the descriptions in FIG. 1 to FIG. 14.

The memory 223 may store various data required for controlling of the L-gNB 220, and may have an area for storing various information and messages described in FIG. 1 to FIG. 14.

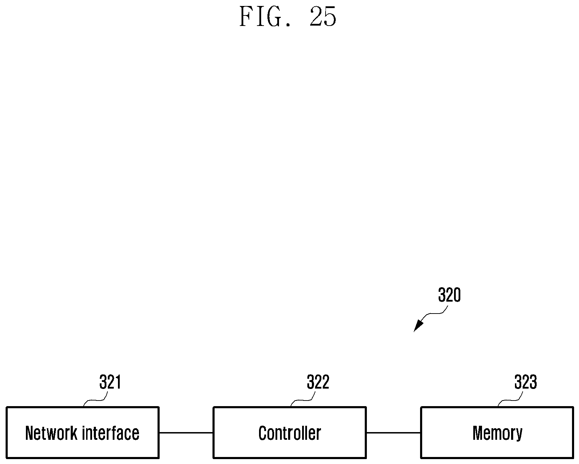

FIG. 25 is a block diagram illustrating the L-UPF 320 of the second network 20 in the wireless communication system according to the disclosure.

Referring to FIG. 25, the L-UPF 320 may communicate with another network entity of the core network 23 of the second network 20 via a network interface 321. For example, the L-UPF 320 may communicate with the UE 100, the L-gNB 220, the L-AMF 420, the L-SMF 520, the L-PCF 620, the L-UDR/UDM 720, the L-NF 920, and the like.

A controller 322 may be implemented as at least one processor and/or program to perform the operation of the L-UPF 320. For example, the controller 322 may perform the operation of the L-UPF 320 described above in FIG. 1 to FIG. 14.

The memory 323 may store programs and various control information required by the controller 322, and may further store the respective pieces of information described in FIG. 1 to FIG. 14.

In addition to the configurations described in FIG. 1 to FIG. 14, the L-UPF 320 may further include various interfaces for connection to an operator. The disclosure is not particularly limited to such additional elements.

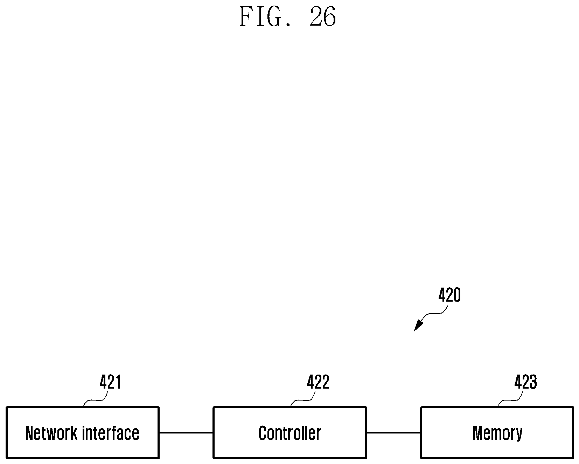

FIG. 26 is a block diagram illustrating the L-AMF 420 of the second network 20 in the wireless communication system according to the disclosure.

Referring to FIG. 26, the L-AMF 420 may communicate with another network entity of the core network 23 of the second network 20 via a network interface 421. For example, the L-AMF 420 may communicate with the UE 100, the L-gNB 220, the L-UPF 320, the L-SMF 520, the L-PCF 620, the L-UDR/UDM 720, the L-NF 920, and the like.

A controller 422 may be implemented as at least one processor and/or program to perform the operation of the L-AMF 420. For example, the controller 422 may perform the operation of the L-AMF 420 described above in FIG. 1 to FIG. 14.

The memory 423 may store programs and various control information required by the controller 422, and may further store the respective pieces of information described in FIG. 1 to FIG. 14.

In addition to the configurations described in FIG. 1 to FIG. 14, the L-AMF 420 may further include various interfaces for connection to an operator. The disclosure is not particularly limited to such additional elements.

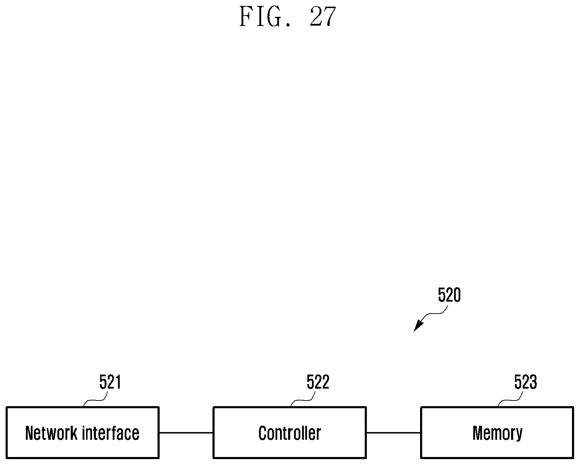

FIG. 27 is a block diagram illustrating the L-SMF 520 of the second network 20 in the wireless communication system according to the disclosure.

Referring to FIG. 27, the L-SMF 520 may communicate with another network entity of the core network 23 of the second network 20 via a network interface 521. For example, the L-SMF 520 may communicate with the UE 100, the L-gNB 220, the L-UPF 320, the L-AMF 420, the L-PCF 520, the L-UDR/UDM 720, the L-NF 920, and the like.

A controller 522 may be implemented as at least one processor and/or program to perform the operation of the L-SMF 520. For example, the controller 520 may perform the operation of the SMF 520 described above in FIG. 1 to FIG. 14.

The memory 523 may store programs and various control information required by the controller 522, and may further store the various information and messages described in FIG. 1 to FIG. 14.

In addition to the configurations described above, the L-SMF 520 may further include various interfaces for connection to an operator. The disclosure is not particularly limited to such additional elements.

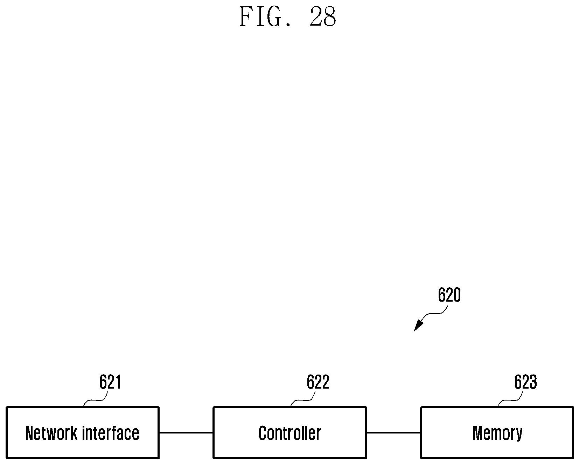

FIG. 28 is a block diagram illustrating the L-PCF 620 of the second network 20 in the wireless communication system according to the disclosure.

Referring to FIG. 28, the L-PCF 620 may communicate with another network entity of the core network 23 of the second network 20 via a network interface 621. For example, the L-PCF 620 may communicate with the UE 100, the L-gNB 220, the L-UPF 320, the L-AMF 420, the L-SMF 520, the L-UDR/UDM 720, the L-NF 920, and the like.

A controller 622 may be implemented as at least one processor and/or program to perform the operation of the L-PCF 620. For example, the controller 622 may perform the operation of the L-PCF 620 described above in FIG. 1 to FIG. 14.

The memory 623 may store programs and various control information required by the controller 622, and may further store the various information and messages described in FIG. 1 to FIG. 14.

In addition to the configurations described above, the L-PCF 620 may further include various interfaces for connection to an operator. The disclosure is not particularly limited to such additional elements.

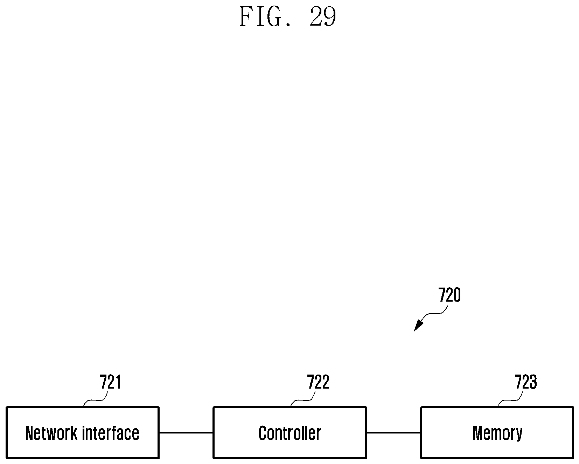

FIG. 29 is a block diagram illustrating the L-UDR/UDM 720 of the second network 20 in the wireless communication system according to the disclosure.

Referring to FIG. 29, the L-UDR/UDM 720 may communicate with another network entity of the core network 23 of the second network 20 via a network interface 721. For example, the L-UDR/UDM 720 may communicate with the UE 100, the L-gNB 220, the L-UPF 320, the L-AMF 420, the L-SMF 520, the L-PCF 620, the L-NF 920, and the like.

A controller 712 may be implemented as at least one processor and/or program to perform the operation of the UDR/UDM 710. For example, the controller 712 may perform the operation of the L-UDR/UDM 720 described above in FIG. 1 to FIG. 14.

The memory 723 may store programs and various control information required by the controller 722, and may further store the respective pieces of information described in FIG. 1 to FIG. 14.

In addition to the configurations described above, the L-UDR/UDM 720 may further include various interfaces for connection to an operator. The disclosure is not particularly limited to such additional elements.

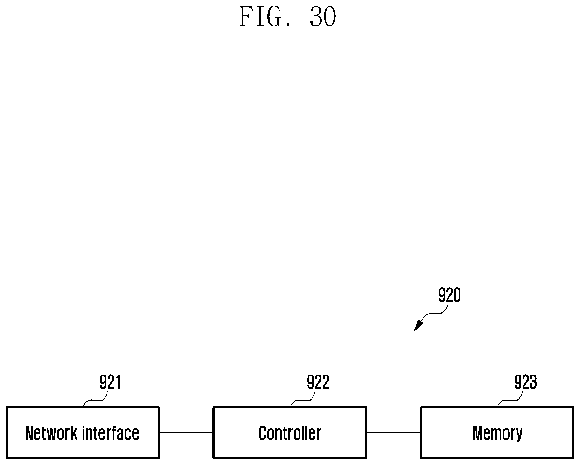

FIG. 30 is a block diagram illustrating the L-NF 920 of the second network 20 in the wireless communication system according to the disclosure.

Referring to FIG. 30, the L-NF 920 may communicate with another network entity of the core network 11 of the second network 20 via a network interface 921. For example, the L-NF 920 may communicate with the UE 100, the L-gNB 220, the L-UPF 320, the L-AMF 420, the L-SMF 520, the L-PCF 620, the L-UDR/UDM 210, and the like.

A controller 922 may be implemented as at least one processor and/or program to perform the operation of the L-NF 920. For example, the controller 922 may perform the operation of the NF 920 described above in FIG. 1 to FIG. 14.

The memory 923 may store programs and various control information required by the controller 923, and may further store the various information and messages described in FIG. 1 to FIG. 14.

In addition to the configurations described above, the L-NF 920 may further include various interfaces for connection to an operator. The disclosure is not particularly limited to such additional elements.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments, but should be defined by the appended claims and equivalents thereof.

### [Industrial Applicability]

The disclosure can be used in the electronics industry and the information and communication industry.

## Claims

1. An operation method of a terminal, the method comprising:
transmitting, to a first base station of a first network, a registration request message comprising an indicator indicating that a terminal has local access to a second network;
receiving a policy update request message comprising an area identifier or a cell identifier related to the second network from the first base station;
based on the policy update request message, updating a policy for the second network; and
based on the updated policy, connecting to a second base station of the second network via the local access.

2. The method of claim 1, wherein information on the second network is transmitted to the first base station via the registration request message, and
wherein the information on the second network comprises the indicator indicating that the terminal has local access to the second network.

3. The method of claim 1, wherein the policy update request message is received by the second base station via an access management function (AMF) from a policy control function (PCF).

4. The method of claim 1, wherein the policy update request message is received by the second base station via a session management function (SMF) and an AMF from a PCF.

5. The method of claim 1, wherein the policy update request message is received from the second base station via system information broadcast (SIB).

6. The method of claim 1, wherein the policy update request message is received from the second base station via a radio resource control message (RRC).

7. The method of claim 1, wherein the local access policy is updated in response to the policy update request message after a local access search function for the local access is enabled.

8. The method of claim 1, wherein the policy update request message is received by the first base station via a user plane function (UPF) from an NF.

9. The method of claim 1, wherein the policy update request message is generated based on local network information generated by a network function (NF), and
wherein the local network information comprises policy information, location information, and local access information related to the second network.

10. An operation method of a terminal, the method comprising:
transmitting, to a first base station of a first network, a notification message notifying of entering coverage of a second base station of a second network;
receiving a policy update request message from the first base station; and
based on the policy update request message, connecting to the second base station,
wherein the notification message comprises an area identifier or a cell identifier related to the second network and an identifier of the terminal.

11. The method of claim 10, wherein the policy update request message comprises a user equipment (UE) routing selection policy (URSP), and
wherein the URSP indicates to connect to the second base station.

12. The method of claim 10, wherein the connecting to the second base station comprises:
based on the policy update request message, updating a policy for the second network; and
based on the updated policy, connecting to the second base station.

13. The method of claim 10, further comprising, after connecting to the second base station, updating a policy for the second network in response to the policy update request message.

14. The method of claim 10, further comprising:
detecting leaving from the coverage of the second base station;
transmitting information on the terminal and information on the second network to the second base station;
receiving a second policy update request message from the second base station; and
based on the second policy update request message, connecting to the first base station.

15. A terminal comprising:
a transceiver; and
a processor coupled to the transceiver,
wherein the processor is configured to perform control to:
transmit, to a first base station of a first network by using the transceiver, a registration request message comprising an indicator indicating that the terminal has local access to a second network;
receive a policy update request message comprising an area identifier or a cell identifier related to the second network from the first base station by using the transceiver;
based on the policy update request message, update a policy for the second network; and
by using the transceiver, connect to a second base station of the second network via the local access, based on the updated local access policy.
